# EUROPEAN PATENT SPECIFICATION

(11) **EP 2 754 156 B1**
(45) Date of publication and mention of the grant of the patent: **18.05.2016**
(21) Application number: 12778404.9
(22) Date of filing: 13.07.2012
(51) Int. Cl.: G21B 3/00

(54) **METHOD AND APPARATUS FOR GENERATING ENERGY BY NUCLEAR REACTIONS OF HYDROGEN ADSORBED BY ORBITAL CAPTURE ON A NANOCRYSTALLINE STRUCTURE OF A METAL**
VERFAHREN UND VORRICHTUNG ZUR ENERGIEERZEUGUNG DURCH NUKLEARREAKTIONEN VON DURCH ORBITALE ERFASSUNG AUF EINER NANOKRISTALLINEN STRUKTUR EINES METALLS ADSORBIERTEM WASSERSTOFF
PROCÉDÉ ET APPAREIL POUR PRODUIRE DE L'ÉNERGIE PAR DES RÉACTIONS NUCLÉAIRES D'HYDROGÈNE ADSORBÉ PAR UNE CAPTURE ORBITALE SUR UNE STRUCTURE NANOCRISTALLINE D'UN MÉTAL

(30) Priority: 14.07.2011 IT PI20110079
(43) Date of publication of application: 16.07.2014
(73) Proprietor: Piantelli, Silvia, 53100 Siena (SI) (IT); Meiarini, Alessandro, 53100 Siena (IT); Ciampoli, Leonardo, 20090 Trezzano Sul Naviglio (IT); Chellini, Fabio, 53100 Colle Val D'Elsa (IT)
(72) Inventor: PIANTELLI, Francesco, I-53100 Siena (IT)
(74) Representative: Celestino, Marco
(86) International application number: PCT/IB2012/053615
(87) International publication number: WO 2013/008219

(56) References cited:
- WO-A1-95/20816
- WO-A1-2009/125444
- WO-A1-2010/058288
- WO-A2-2007/130156
- BAKSHT ET AL.: "Determination of the negative hydrogen ion concentration in a cesium-hydrogen discharge", TECHNICAL PHYSICS, vol. 46, no. 8, August 2001 (2001-08), pages 946-951, XP002669483, ISSN: 0044-4642
- VOLKOV ET AL.: "Generation of high-energy negative hydrogen ions upon the interaction of superintense femtosecond laser radiation with a solid target", JETP LETTERS, vol. 76, no. 3, 2002, pages 139-142, XP002669484, Russia ISSN: 0370-274X, DOI: 10.1134/1.1514755

## Description

### Field of the invention

The present invention relates to an improvement of the method and of the generator described in international patent application WO2010058288, claiming Italian priority ITPI2008A000119, here incorporated by reference.

In particular, the present invention relates to a method and to a generator for increasing the production of energy with respect to what is possible with the method and the generator described in the above mentioned patent application. Furthermore, the invention relates to a method and to a generator suitable for adjusting the production of energy starting from the method and with the generator of this previous patent application.

### Technical problem

From WO9520816 a method is known for obtaining energy from nuclear reactions which take place due to the interaction between hydrogen and a metal core.

From WO2010058288 a method is known for obtaining energy from nuclear reactions of a core comprising cluster nanocrystalline structures of a transition metal, as well as a generator for carrying out this method.

Among the critical aspects of the disclosed method and generator, the need is felt to provide an increase of the production rate, in order to achieve industrially acceptable levels.

Another critical aspect of the method is the adjustment of the generated power. The devices of the generator for carrying out this adjustment are a critical aspect as well.

### Summary of the invention

It is therefore a feature of the present invention to improve the method and the generator described in WO2010058288, in order to increase the generation of energy until an industrially acceptable level is attained.

It is another feature of the present invention to improve this method and generator, in order to reliably and accurately adjust the power supplied by the generator.

These and other objects are achieved by a method to obtain energy by nuclear reactions between hydrogen and a transition metal, the method being defined in claim 1.

In particular, the primary material comprises a predetermined amount of cluster crystal nanostructures i.e. clusters of the transition metal, the crystal nanostructures having a number of atoms of the transition metal lower than a determined number of atoms. In this way, orbital capture reactions of H- ions are caused by the primary material of the cluster crystal nanostructures and then nuclear capture reactions of the proton ¹H⁺ deriving from the H- ion due to the loss of two electrons, as described hereinafter, by the atoms of the metal of such clusters, which causes a subsequent fall on inner orbitals and allows a nuclear capture by the nucleus of the metal and a generation of thermal energy.

More in detail, during the process of orbital capture, H- ions can lose its own couple of electrons and form protons ¹H⁺. A first fraction of the protons ¹H⁺ is subjected to direct nuclear capture reactions by the nuclei of the same atoms of the clusters in which the orbital capture has occurred, while a second fraction of the protons ¹H⁺ can be expelled by Coulomb repulsion from the nucleus of the metal atom where the orbital capture has taken place. The expelled protons have an energy that can be determined and characterised. For instance, in the case of Nickel, this energy is about 6.7 MeV, as detected by a Wilson chamber, on the basis of Bethe's equation. A part of the protons of the second portion, which does not react with other nuclei of the primary material, can leave the latter and interact with a material adapted to give rise to proton-dependent reactions, if this is present.

For example, the transition metal can be Nickel. In this case, examples of direct capture reactions, indicated hereinafter also as primary reactions, i.e. examples of orbital capture reactions followed by a nuclear capture of the proton ¹H⁺ that are produced from H- ion after loss of two electrons, are indicated hereinafter as {1a}, {1b}, {1c}, {1d}, {1e}.

The hydrogen that is in contact with the clusters is at a pressure set between 50 absolute mbar and 10 absolute bar. In particular, the hydrogen that is in contact with the clusters is at a pressure set between 100 absolute mbar and 4 absolute bar. Preferably, the hydrogen that is in contact with the clusters is at a pressure set between 150 and 800 absolute mbar.

Preferably, the step of generating new H⁻ ions comprises a step of ionizing the hydrogen which is in contact with the clusters.

In particular, the step of ionizing the hydrogen can comprise a step of continuously or variably or discontinuously supplying an energy vector to the hydrogen, in order to assist the molecular dissociation of hydrogen and to cause a further formation of H- ions in addition to the H- ions that are formed by interaction between molecular hydrogen H₂ and a cluster surface. This process occurs by involving the valence electrons of the transition metal, whose transfer from the transition metal to hydrogen is assisted by supplying an amount of energy.

Such energy vector can comprise a ionizing radiation of various nature and frequency. In particular, such ionizing radiation can be selected from the group consisting of:
- a radiofrequency, in particular microwaves;
- a high intensity light radiation, as the one that can be obtained from concentrated spot power lamp or from a laser system;
- a light radiation;
- a UV - radiation;
- an X - radiation;
- an a - radiation;
- a β - radiation;
- a γ - radiation;
- a combination of such radiations.

In addition, or in alternative, the energy vector can comprise supplying particle beams . For example, such particle beams can comprise particles selected from the group consisting of:
- protons,
- hyperons,
- mesons,
- leptons;
- accelerated ions of any element, preferably metal ions;
- a combination of such particles.

A step can also be provided of prearranging a radioactive material proximate to said primary material.

For example, a step can be provided of prearranging near the active core a material that naturally emits α-particles, such as Polonium, Thorium, Uranium, Plutonium, Americium and a transuranic metal in general, or a combination thereof.

For example, a step can be provided of prearranging near the active core a radioactive material such as ¹³⁷Cs or ⁹⁰Sr or an element that emits γ-radiation and ionizing charged particles, which belongs to one of the three natural radioactive decay chains (²³²Th, ²³⁵U, ²³⁸U) or to the artificial radioactive decay chain of ²³⁹Pu.

In particular, a step is provided of adjusting the thermal power, comprising a step of changing the intensity of the ionizing radiation and/or of the beam of particles. This way, besides being useful to improve and upgrade a generator of the type described in WO2010058288, the technique to increase the H- ions formation rate, disclosed hereinafter, also allows controlling the removed thermal power.

In an exemplary embodiment, a step is provided of prearranging an amount of a secondary material facing the primary material and within a predetermined maximum distance from the primary material, the secondary material selected to engage with protons of energy higher than a predetermined energy threshold, which come from the primary material, by nuclear proton-dependent reactions that occur with a release of radiations, in particular of α, β, γ, X radiations, and/or of particles, wherein said protons are emitted by said primary material, wherein said step of supplying an energy vector (69) is carried out by said radiations and/or said particles released by said proton-dependent reactions, the radiations and/or the particles reaching the hydrogen proximate to the primary material, which provides am excitation step.

More in detail, such protons of energy higher than a predetermined energy threshold come from the clusters due to Coulomb repulsion that takes place owing to the process of orbital capture of H- ions by the atoms of the clusters of the primary material.

In particular, the secondary material adapted to engage with the protons is selected from the group consisting of:
- Lithium, in particular Lithium comprising predetermined fractions of ⁶Li and ⁷Li isotopes. In this case, examples of proton-dependent reactions are the reactions hereinafter indicated as {2a}, {2b}, {3a}, {3c}. Some of those reactions occur with production of α-particles;
- Boron, in particular Boron comprising predetermined fractions of isotopes ¹⁰B and ¹¹B. In this case, examples of proton-dependent reactions are the reactions hereinafter indicated as {4a}, {4b}, {5a}, {5b}. Some of those reactions occur with production of α-particles;
- a transition metal, which is advantageously selected among the ancestors of the four decay chains, ²³²Th, ²³⁶U, ²³⁹U, ²³⁹Pu. In this case, examples of proton-dependent reactions are the reactions hereinafter indicated as {8a}, {8b}, {8c}, {8d}, which occur with a release of β particles;
- a combination thereof.

The use of an α-emitting material as the secondary material can also cause α-dependent reactions with the metal of the primary material. For instance, in the case of Nickel, reactions {9a}, {9b}, {9c}, {9d}, {9e} are possible.

In particular, the primary material comprises Nickel.

The step of removing the thermal power is carried out while maintaining the temperature of the active core above the critical temperature, in order to assist a continuous H⁻ production.

Furthermore, the step of removing the thermal power is preferably carried out in such a way that the power released by the generator is determined.

To this purpose, the step of ionizing hydrogen can comprise the steps of:
- increasing a temperature of the primary material from a working temperature to a predetermined increased temperature suitable for causing an increase of the concentration of H⁻ ions;
- maintaining the increased temperature of the primary material by increasing the removed thermal power until an increased steady-state thermal power is attained.

The increase of the temperature can be obtained by reducing the removal of thermal power starting from a steady-state thermal power. For instance, then removed thermal power can be reduced by decreasing the flowrate of a heat exchange fluid used to withdraw heat from the active core.

In particular, the step of maintaining the temperature is a controlled transient state, at the end of the transient state the removed power reaching a value higher than the steady-state removed power.

In other words, by an instantaneous or temporary decrease of the removed thermal power, an increase occurs of the temperature, which increases the production rate of H- and therefore increases the number of H⁻ ions produced and captured by the nuclei of the transition metal. This allows increasing the globally removed thermal energy up to a predetermined value.

Alternatively, or in addition, the increase of the temperature can be obtained by a step of decreasing the pressure of the hydrogen that is in contact with the clusters of the active core. In fact, by reducing the pressure of the hydrogen, i.e. by creating a predetermined vacuum degree in a generation chamber that contains the active core, the thermal losses from the generation chamber decrease, since the convection heat exchange coefficient decreases.

Therefore, besides being useful to improve and upgrade a generator of the type described in WO2010058288, the technique to increase the H- ions formation rate, disclosed hereinafter, also allows controlling the removed thermal power.

The step to increasing the H- ions formation rate can comprise a step of:
- prearranging an electron-donor material that comprises at least one electron-donor chemical element, proximate to the primary material;
- conveying and impacting the hydrogen on the electron-donor material.

In particular, the at least one electron-donor chemical element can be selected among those elements of the group IA and of the group IIA of Mendeleev's periodic table that have Pauling electronegativity in absolute value lower than or equal to 1, i.e. it can be selected from the group comprised of: Cesium (Cs), Barium (Ba), Strontium (Sr), Rubidium (Rb), Lithium (Li), Sodium (Na), Calcium (Ca), Potassium (K), Francium (Fr), Radio (Ra). Preferably, the electron-donor chemical element is Cesium.

Alternatively, the electron-donor material (75) is obtained from the combination of a first chemical element with a second chemical element such that said electron-donor material (75) has a Pauling electronegativity absolute value lower than or equal to 1.

In this way, a larger amount of electrons is available, and the formation of H⁻ ions is enhanced, in addition to the amount of H- ions that is formed by interaction of gaseous hydrogen with the surface of the active core, i.e. with the cluster surface, and that is caused by heating the active core.

In particular, a step is provided of causing a circulation of a flux of hydrogen within a generation chamber that contains the primary material, such that the hydrogen iteratively carries out the step of conveying and impacting on the electron-donor material. This way, the concentration of H- ions in the circulating hydrogen flow, in particular the concentration of H- ions in the closed circuit circulating hydrogen flow, can be kept at a substantially fixed level for a predetermined time. Alternatively, the concentration of H- ions can be increased with respect to the concentration it would have in a stagnant hydrogen mass or in a hydrogen mass that circulates within the generation chamber, or in a stream that flows through the generation chamber, or in a combination of a hydrogen stream and of a hydrogen recirculation. This feed and treatment mode of the hydrogen makes it possible to limit or to prevent waste loss and/or hydrogen emissions, which is advantage for the safety and for the economy of the process.

In particular, a step is provided of adjusting the thermal power comprising a step of changing a flow rate of the circulation of the hydrogen within the generation chamber. In fact, by increasing/decreasing the hydrogen flowrate, the effectiveness of the impacts of the hydrogen against the electron-donor material increases/decreases and, accordingly, the formation rate of further H-ions increases/decreases.

Due to the presence of α-particles (⁴₂He²⁺) generated by the above indicated reactions, a certain amount of atomic helium He is formed in the gas proximate to the active core. The atomic helium can accumulate and/or achieve such a concentration level that it causes an inacceptable poisoning of the energy production process. In fact, atomic helium can lead to a *detachment* of the second electron of the H- ions, which reduces the amount of H- ions that are available for the orbital capture process.

This can take place, in particular, if the step is provided of causing a circulation of a flux of hydrogen, as above indicated, through the decrease of the amount of H⁻.

To avoid such an accumulation of atomic helium, a step can be provided, of continuously or intermittently removing, i.e. of bleeding a predetermined amount of the gas. This step of removing is associated with a step of making up an amount of hydrogen that corresponds to the amount that is bled along with the helium-containing gas. A step of pre-heating the make-up gas flow can be provided, in order to maintain the temperature of the reactor at a process temperature value higher than the Debye temperature.

The objects of the invention are also achieved by [20] a generator of energy by nuclear reactions between hydrogen and a transition metal, the generator being defined in claim 11.

Such a generator enables the a method according to the invention, with a high production rate increase with respect to a generator described in WO2010058288 that comprises the same transition metal or the same transition metals, and that works at the same triggering conditions and at the same operative conditions.

In particular, said primary material comprises a predetermined amount of cluster crystal nanostructures i.e. clusters of said transition metal, said crystal nanostructures having a number of atoms of the transition metal lower than a determined number of atoms.

In particular, the primary material comprises Nickel. The active core can comprise a support body made of a metal or non-metal material and a coating of the support made of the primary material, which is in the form of nanometric clusters. The coating of nanometric clusters can be made by a process selected among those indicated in WO2010058288, for example by a process selected from the group consisting of: chemical deposition, an electrolytic deposition, a spraying technique, a sputtering technique.

Advantageously, the metal support of the active core comprises a metal in a glass state, in other words it comprises at least one metal in which a crystalline ordered structure is substantially missing.

The support of the active core can comprise a transition metal, in particular a transition metal in the amorphous state as indicated above. Such transition metal can be selected from the group consisting of: Ni, Cr, Zr and Mo or a combination thereof, and can include a low-melting metal such as Al. For example, the support can comprise an alloy of element percentages about 70% Ni, 10% Cr, 5% Zr, 15% Al. The transition metal of the support can be present also in the primary material, in the form of micro-nanometric clusters.

The means for increasing the H- ions comprises an ionization means for ionizing the hydrogen which is in contact with the primary material of the clusters.

In particular, the ionization means comprises a hydrogen gas excitation by supplying an energy vector to the hydrogen, and primary material excitation means by supplying an amount of energy.

In particular, the excitation means can be a means for supplying an ionizing radiation of different natures and various frequency. For instance, a radiation supply means can be provided that re adapted to supply a radiofrequency. In alternative, or in addition, the means for supplying ionizing radiation can be adapted to supply a high intensity light radiation, in particular a light radiations generated by a concentrated spot power lamp or by a laser system. In alternative, or in addition, the means for supplying ionizing radiation can be adapted to supply a UV radiation, an X-radiation, an α-radiation, β-radiation, a γ-radiation. For example α-particles emitting materials, such as Po, Th, U, Pu, Am and, more in general transuranic metals, can be introduced into the reactor.

In addition, or in alternative, the excitation means can be a means for supplying beams of particles. For example, a means can be provided for supplying particles such as protons, hyperons, mesons, leptons, accelerated ions of any element, preferably metal ions.

In particular the generator comprises a means for adjusting the generated thermal energy and the removed thermal power, comprising a means for changing the intensity of the ionizing radiation and/or of the beam of particles.

In an exemplary embodiment, the means for supplying an energy vector comprises an amount of a secondary material, in particular Lithium and/or Boron and/or a transition metal as mentioned above, which are arranged within a predetermined maximum distance maximum from the material of the active core, the secondary material adapted to react with protons of energy higher than a predetermined energy threshold, such that protons emitted during the orbital capture reaction of the H⁻ ions cause secondary nuclear reactions that occur with a release of the radiations, in particular of α-radiation and/or β-radiation and/or γ-radiation, and/or X-radiation, and/or of the particles.

In an exemplary embodiment, the secondary element forms a portion of a containing element for the active core, in particular it forms a wall of the generation chamber. In particular, this containing element comprises an alloy of a structural metal and of the secondary material. In alternative, the secondary material forms secondary elements that integral to the containing element. Due to the relative production ease, this exemplary embodiment is well-suited to make small power and low-cost generators.

In another exemplary embodiment, the active core comprises a plurality of substantially plane primary elements that are at least in part made of the primary material, and a plurality of substantially plane secondary elements is provided, which are at least in part made of the secondary material, where the primary elements and the secondary elements are advantageously arranged such that each primary element interposes between two secondary elements, and each secondary element interposes between two primary elements. This allows creating a high surface of exposed secondary material, for a same size of the generator. The surface of the exposed secondary material increases as the thickness decreases and as the mutual distance decreases between the substantially plane primary elements and the substantially plane secondary elements.

As described above, but without excluding other possibilities, the substantially plane primary elements of the active core can comprise:
- a support of a not-metal material, or a metal support, in particular a metal support made of an amorphous metal;
- a coating of this support made of this primary material, in the form of nanometric clusters.

Alternatively, but without excluding other possibilities, the substantially plane secondary elements can comprise a structural material along with the secondary material, for example in the form of an alloy that has an amorphous structure.

In an exemplary embodiment, the heat production rate adjustment means comprises a means for changing the amount of secondary material that faces the primary material and that is arranged within the predetermined maximum distance.

In particular, the heat production rate adjustment means comprises:
- an adjustment body;
- a means for displacing the adjustment body, in the generation chamber, with respect to the primary material between a first position and a second position, corresponding respectively to a maximum exposition and to a minimum exposition of the secondary material on the primary material.

In an exemplary embodiment, the adjustment body comprises a shield body arranged between the primary material and the secondary material, the shield body being movable between the first position of maximum exposition and the second position of minimum exposition.

In another exemplary embodiment, the adjustment body comprises a support body for the secondary material arranged near the primary material, the support body being movable between the first position of maximum exposition and the second position of minimum exposition. In particular, the adjustment support body can be arranged between the active core and a containing element for the active core, or can comprise a plurality of secondary elements arranged between active core portions adjacent to each other, for example between substantially plane primary elements arranged parallel to each other, as described above.

This way, by a predetermined movement of the adjustment body, i.e. of the shield body and/or the support body, it is possible to increase/decrease the amount of exposed secondary material, and to obtain a corresponding increase/decrease of energy delivered by the generator.

In an exemplary embodiment, the active core comprises a hollow body, and the adjustment body comprises a support body slidingly arranged in a recess of the active core. The hollow body of the active core can be a tubular body whose cross section can have a whichever plane shape, the tubular body having a central elongated recess. For example, this tubular body can have circular, elliptical, polygonal cross section with a desired number of sides. The adjustment body can be an elongated body, for example it can be a body having the shape of a cylinder or of a parallelepiped whose cross section can have a whichever plane shape. In particular, this elongated body can have circular, elliptical, polygonal cross section with a desired number of sides, such that it allows a movement, in particular a co-axial sliding in the recess of the tubular body.

In another exemplary embodiment, the adjustment body comprises a plurality of substantially plane adjustment elements integral to one another, which are arranged such that each adjustment element slidingly interposes between two secondary elements, or between a primary element and a secondary element according to whether the adjustment body is a support body or is a shield body, and the means for displacing the adjustment body is configured to provide a relative movement between the adjustment elements and the primary elements and/or the secondary elements interposed to each other, according to the planes common to the substantially plane primary and/or secondary elements and to the substantially plane adjustment elements. This way, it is possible to adjust integrally respective surface portions of each secondary element facing the primary elements, by changing the amount of secondary material exposed to the protons emitted by the primary material of the primary elements of the active core, i.e. exposed to the protons emitted by the clusters of the primary material. This makes it possible to obtain a high adjustment capacity of the generator for a same size of the generator. Such adjustment capacity increases as the thickness decreases and/or as the mutual distance decreases between the substantially plane primary elements and the substantially plane secondary elements.

In particular the substantially plane primary and/or secondary elements and/or the substantially plane adjustment elements are arranged integrally rotatable about an axis of the generator, and the adjustment means comprises a relative rotation means of the plurality of primary and/or secondary elements and of the plurality of adjustment elements about this axis.

In a possible alternative exemplary embodiment, the adjustment means comprises a relative translation means of the plurality of primary and/or substantially plane secondary elements and of the plurality of substantially plane adjustment elements according to a direction of the planes common to the primary and/or secondary elements and to the adjustment elements.

In particular, the ionization means comprises:
- a means for reducing the steady-state removed thermal power during the step of removing the thermal power, such that the removed power reduction causes a predetermined temperature increase of the primary material, starting from a working temperature until an increased temperature is attained, so that H- ions formation rate increases;
- a means for maintaining the temperature of the primary material at a predetermined temperature value, by increasing the removed power, in particular, in order to restore the working temperature, wherein the removed power achieves a value higher than the steady-state removed power once the working temperature restore step has been accomplished.

In particular the ionization means comprises:
- an electron-donor material comprising at least one electron-donor chemical element is present arranged proximate to the active core;
- a means for conveying hydrogen and impacting the hydrogen to/on the electron-donor material.
The at least one electron-donor material is selected from the group consisting of: Cs, Ba, Sr, Rb, Li, Na, Ca, K, Fr, Ra, in particular this electron-donor material is Cesium.

Alternatively, the electron-donor material is obtained by the combination of a first element with a second element such that the donor material globally has a Pauling electronegativity in absolute value lower than or equal to -1.

In particular, a circulation means for creating and maintaining a circulation of a flow of the hydrogen within the generation chamber, such that the hydrogen iteratively is conveyed and iteratively hits the electron-donor material. The means for creating and maintaining the circulation of hydrogen in the generation chamber can comprise a gas-handling device, such as a fan, which can be installed along an annular path made within the generation chamber, around the active core. In alternative, this device can be installed along a duct portion that is located between a hydrogen outlet port and an inlet port from/into the generation chamber.

In particular, the generator comprises a means is provided for changing the flowrate of the circulation of the hydrogen within the generation chamber, in order to adjust the thermal power. In fact, by increasing/decreasing the hydrogen flowrate, the effectiveness of the impacts of the hydrogen against the electron-donor material increases/decreases and, accordingly, the formation rate of further H- ions increases/decreases. These means for modulating the flowrate can comprise a means, such as an inverter, for adjusting the flowrate created by the gas-handling device. In alternative, the means for modulating the flowrate can comprise a variable-section passage along the annular path. For instance, the means for modulating the flowrate can comprise a valve installed along the duct or the duct portion located between the hydrogen inlet port and the hydrogen outlet port.

Preferably, a bleed means is provided for continuously or intermittently bleeding an amount of gas from the generation chamber, and a make-up means is provided for an amount of hydrogen corresponding to an amount bled with by the bleed means, in order to prevent atomic helium to accumulate in the gas that is contained in the generation chamber.

Advantageously, a means is provided for preheating a make-up gas flow associated with the make-up means, in order to keep the temperature of the generation chamber at a process temperature value higher than Debye temperature.

### Brief description of the drawings

The invention will be now shown with the description of exemplary embodiments of the generator and of the method according to the invention, exemplifying but not limitative, with reference to the attached drawings, in which like reference characters designate the same or similar parts, throughout the figures in which:
- Fig. 1 is a block diagram of an exemplary embodiment of the method according to the invention, to generate energy by nuclear reactions of hydrogen adsorbed on a crystalline structure of a metal;
- Fig. 2 is a diagrammatical view of a crystal layer comprising clusters arranged on the surface of a substrate;
- Fig. 3 is a diagram of the interactions between hydrogen and the clusters in a local enlarged view of Fig. 2;
- Figs. 4 and 5 are diagrams of the orbital capture of an H- ion by an atom of a transition metal, and of the subsequent steps of fusion nuclear reactions by nuclear capture of a portion of the H- ions by nuclei of the transition metal, with production of heat, and steps of transformation of other H- ions into protons ¹H⁺, followed by an expulsion by Coulomb repulsion from the atom of the transition metal and subsequent capture into a material adapted to capture protons and to interact with them by nuclear proton-dependent reactions, with a further production of energy in the form of heat;
- Fig. 6 is a longitudinal sectional view of a generator for obtaining energy according to an exemplary embodiment of the present invention;
- Fig. 7 is a view similar to the one of Fig. 2, in which an element comprising a secondary material is also shown;
- Fig. 8 is a perspective diagrammatical view of an active core comprising two cylindrical tubular concentric bodies and a tubular adjustment body that is arranged to be introduced between the two cylindrical bodies of the active core, according to an exemplary embodiment;
- Fig. 9 is a perspective diagrammatical view of an active core and of an adjustment body which comprise respective pluralities of plane bodies that can have an interfolded configuration;
- Fig. 10 is a partial cross sectional view of the active core and of the adjustment body of Fig. 9, according to a section plane indicated by A-A line;
- Fig. 11 is an exploded perspective diagrammatical view of an active core and of an adjustment body that comprise respective plurality of plane bodies rotatably arranged to have an interfolded configuration;
- Fig. 12 is an elevation front view of the generator of Fig. 11;
- Fig. 13 is a diagrammatical perspective view of a generator according to another exemplary embodiment of the present invention, wherein an elementary generation cell is provided which comprises coaxial primary and secondary elements or tubular bodies, respectively, and a tubular adjustment shield element or body that is suitable for introduction between primary and secondary tubular bodies of the elementary cell;
- Fig. 14 shows a diagram that schematically represents a method for increasing the H- ions formation rate and, accordingly, the heat production rate;
- Figs. 15 and 16 are longitudinal sectional views of a generator for obtaining energy according to respective exemplary embodiments of the present invention;
- Fig. 17 is a partial longitudinal sectional view of a generator for obtaining energy according to another exemplary embodiment of the present invention;
- Fig. 18 diagrammatically shows a surface structure of an active core and of a support substrate of an electron-donor material to increase the H-ions formation rate.

### Description of preferred exemplary embodiments

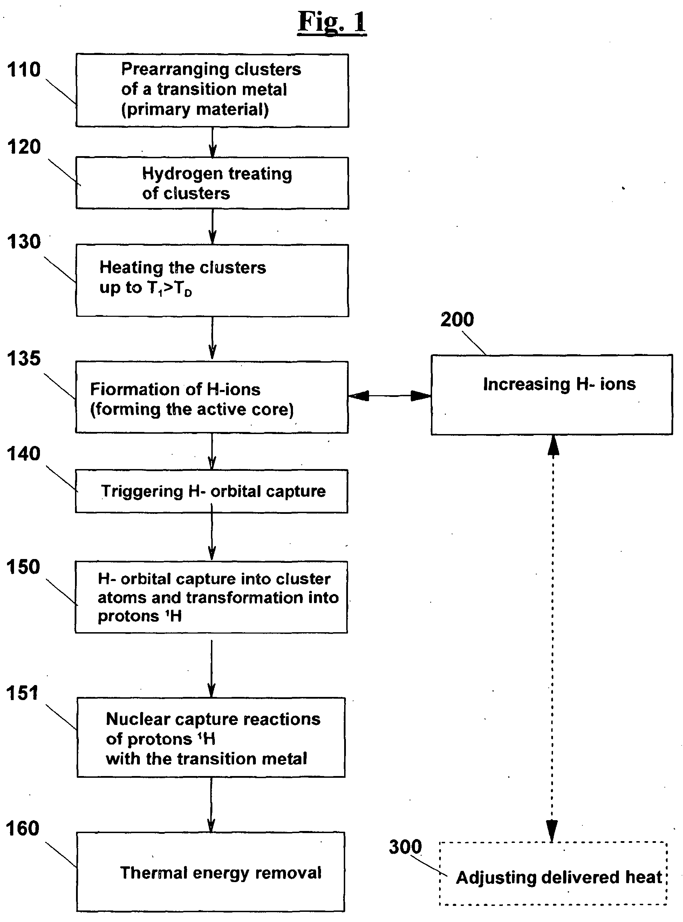

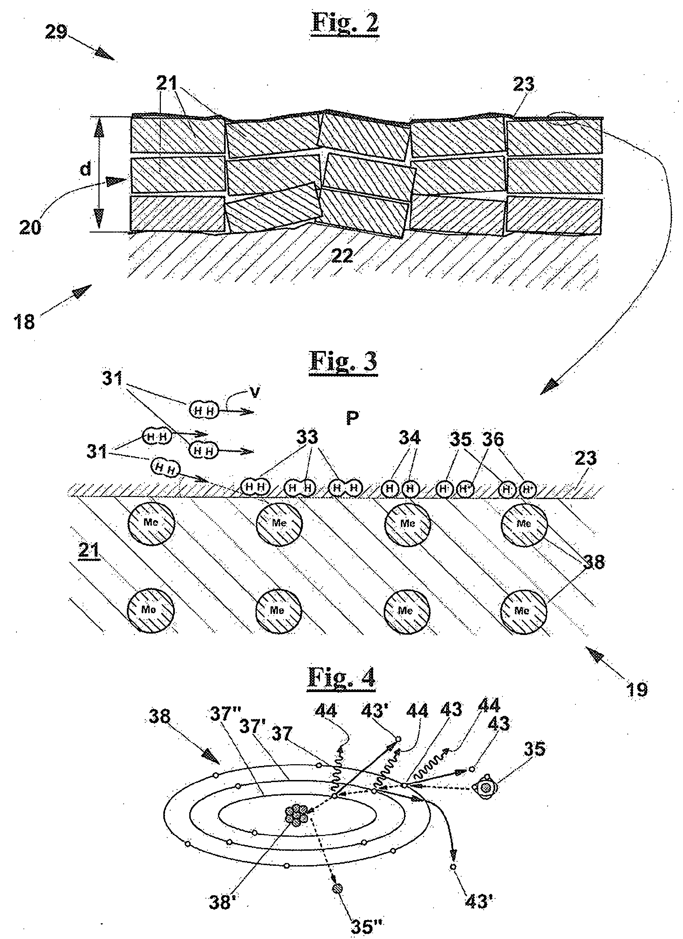

With reference to Figs. 1, 2 and 3, a method is described, according to an exemplary embodiment of the invention, to obtain energy by a sequence of nuclear reactions between hydrogen 31 and a transition metal 19 (Fig. 2). According to this exemplary embodiment, the method provides a step 110 (Fig. 1) of prearranging a primary material 19 that comprises a predetermined amount of micro-nanometric clusters 21 of a transition metal (Fig. 2). In an exemplary embodiment, the clusters 21 form a layer 20 that is arranged on a substrate 22 and is limited by an interface surface 23. Together with substrate 22, layer 20 of clusters 21 forms an active core 18. The thickness d of crystal layer 20 is preferably set between 1 nanometer and 1 micron.

In order to be clusters, crystals 21 must comprise a number of atoms of the transition metal lower than a predetermined critical number, above which the crystals lose the cluster features. In the case of a material deposited on a substrate 22, as shown in Fig. 2, the deposit must be carried out in such a way that 1 square centimetre of surface 23 contains on average at least 109 clusters 21. A list of deposition methods suitable for obtaining the cluster structure is shown in patent application WO2010058288. In another exemplary embodiment, alternative, the active core can comprise a transition metal in the form of particles as powder, dissolved or sintered. Active core 18 can then be formed in such a way that it shows the clusters on its surface. In particular, the core can comprise a support material on which the clusters are deposited or formed. The transition metal can be deposited by a deposition process selected among a chemical process, an electrolytic process, a spraying process, a sputtering process and other processes, and a combination thereof..

In a subsequent step 120 of treatment (Fig. 1) of clusters 21 with hydrogen 31 (Fig. 3), hydrogen 31 is brought into contact with surface 23 of clusters 21, in order to obtain a population of hydrogen H2 molecules 33 adsorbed on surface 23.

The method also comprises an initial heating step 130 of surface 23 of the cluster, from an initial process temperature T₀, typically the room temperature, up to a temperature T₁ higher than a predetermined critical temperature T_{D}

Due to the adsorption and to the temperature, the bond between the atoms of the hydrogen molecules is weakened, until homolytic or heterolytic scission or dissociation conditions are attained for molecules 33. Starting from each hydrogen H₂ diatomic molecule 33 a couple of hydrogen atoms H 34, or a couple comprising a negative hydrogen H- ion 35 and a positive hydrogen ion + H 36 can form, respectively.

More in particular, as already described in WO2010058288, this process of bond weakening and of H- ions 35 production, in particular, is assisted by a heating step 130 of surface 23 of the cluster, from an initial process temperature T₀, typically the room temperature, up to a temperature T₁ higher than a predetermined critical temperature T_{D}. More in detail, near surface 23 of the crystals, a dynamic equilibrium is established between molecular hydrogen H₂ and, in particular, ions H 36 and H 35. This equilibrium is more or less shifted towards ions H⁺ and H responsive to such operating parameters as temperature T and pressure P of hydrogen 31.

Clusters 21 together with hydrogen 35, in the form of H⁻ ions, form (step 135) an active core 18 in which the hydrogen, in the form of H- ions 35, is available for orbital capture by the atoms of clusters 21 of transition metal 19 (Fig. 3) or, in other words, by a gigantic atom of the transition metal comprising all the atoms that are arranged to form a cluster structure.

Hydrogen can also undergo an interstitial adsorption at the grain boundaries and at microfractures of the transition metal, however these events of absorption are of no importance for the purpose of ions H⁻ 35 orbital capture.

The orbital capture takes place as a consequence of a step 140 of impulsive trigger action of the energy generation process (Fig. 1). Step 140 of impulsive trigger action consists of supplying an energy pulse, for example in one of the forms and by one of the procedures that are described in WO2010058288. Such energy pulse causes an orbital capture 150 of H⁻ ions 35 by an atom 38 (Fig.3) of a cluster 21.

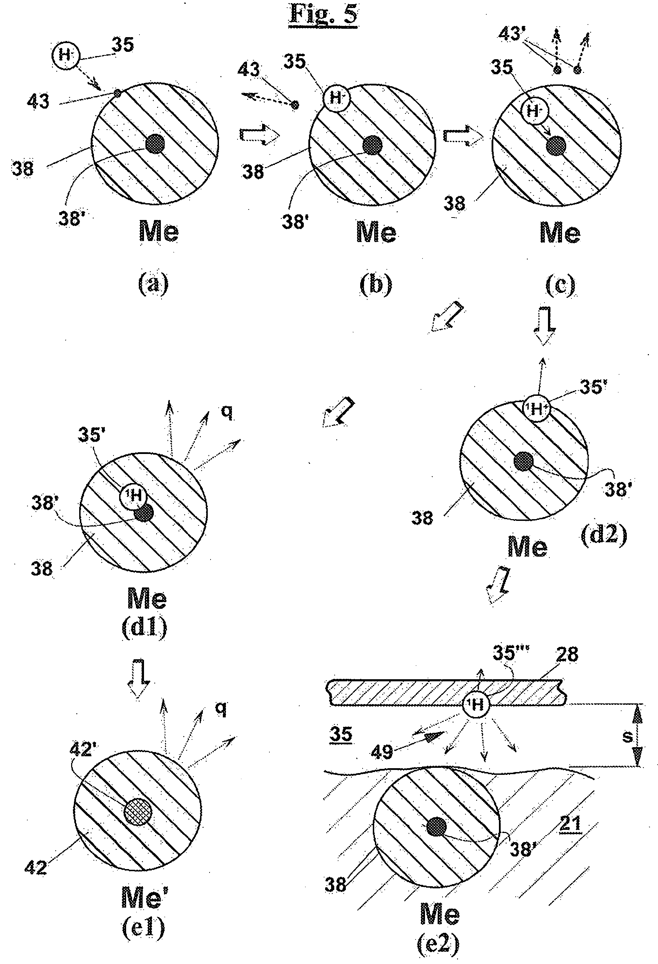

During orbital capture 150 an electron 43 of atom 38 is replaced, as diagrammatically shown in Figs. 4 and 5, part. (a,b). Since H⁻ ions 35 that have been captured in the orbitals 37, 37', 37" of the transition metal have a mass three orders of magnitude larger than the mass of an electron 43, step 150 goes on with a migration of the captured H- ion until this reaches the inner layers or orbitals 37', 37", with emission of Auger electrons 43' and emission of X-ray 44, as still diagrammatically shown in Figs. 4 and 5, part. (c). In other words, capture step 150 goes on with a transformation of H⁻ ions 35 into protons ¹H 35', due to the loss of two electrons by each H**⁻** ion.

Since their Bohr radius is comparable with the core radius, protons ¹H 35' can be captured by the nucleus and can undergo a step 151 of nuclear capture reactions and fusion with the nuclei 38' of atoms 38 of the transition metal, i.e**.** a step 151 of nuclear capture by atoms 38, as diagrammatically shown in Fig. 5, part. (d1). This causes a structural rearrangement that generates a new nucleus 42' of an element Me' 42, which is different from transition metal Me, and that causes a mass defect energy release q. The energy that is generated is perceived in the form of heat, as it is diagrammatically shown in Fig. 5, part. (e1).

The useful metals, as described in WO2010058288, can be Sc, Ti, V, Cr, Mn, Fe, Co, Ni, Rb, Sr, Y, Zr, Nb, Mo, Tc, Ru, Rh, Pd, Ag, Cd, In, Sn, Sb, Te, Cs, Ba, La, Ce, Pr, Nd, Pm, Sm, Eu, Gd, Tb, Dy, Ho, Er, Tm, Yb, Lu, Hf, Ta, W, Re, Os, Ir, Pt, Au, Th, U, Pu and transuranic metals, an alloy or, more in general, a mixture of two or more than two of the above listed metals.

In particular, the transition metal is Nickel, which typically comprises the following isotopes (between parentheses the occurrences relative of each isotope): ⁵⁸Ni(68.1%), ⁶⁰Ni(26.2%), ⁶¹Ni(1.14%), ⁶²Ni(3.64%), ⁶⁴Ni(0.93%).

In the case of Nickel, the internal primary nuclear reactions of direct capture, as calculated taking into account the conservation of the spin and of the parity, as well as the Gamow coefficient, can be written:

- ¹H + ⁵⁸Ni-> ⁵⁹Cu + 3.417 MeV {1a}

- ¹H + ⁶⁰Ni-> ⁶¹Cu + 4.796 MeV {1b}

- ¹H + ⁶¹Ni-> ⁶²Cu + 5.866 MeV {1c}

- ¹H + ⁶²Ni-> ⁶³Cu + 6.122 MeV {1 d}

- ¹H + ⁶⁴Ni-> ⁶⁵Cu + 7.453 MeV {1e}.

All the above-mentioned reactions have the same probability factor [0] and occur conserving the spin and the parity.

Globally, step 151 occurs with a production of a thermal energy q, that is associated to the reaction heat of the reactions involved, and to a step 160 (Fig. 1) of removing a thermal power Q, which is carried by using an extraction means such as a conventional fluid extraction means, as described hereinafter.

As still shown in Fig. 1, the method also comprises a step 200 of generating further H- ions, so that the concentration of H- ions 35 in hydrogen 31 that is in contact with clusters 21 increases, changing from a first value to a second value higher than the first value. The first value of concentration corresponds to H- ions 35 that are formed on the cluster surface, according to the mechanism described above, with reference to Fig. 3.

As a consequence of such a concentration increase of H- ions 35, the rate of the orbital capture reactions increases and, accordingly, the rate of the above described nuclear capture reactions increases, therefore thermal energy q generation increases.

Step 200 of generating new H- ions can be carried out by ionizing hydrogen atoms 31 that are in contact with clusters 21, by a suitable ionization means, as described hereinafter.

The difference between the second concentration value and the first concentration value of H- ions 35 depends upon the means and upon the methods that are used to provide step 200 of generating further H- ions, or of further ionizing the hydrogen by other means ionizing, different from the surface of clusters 21 and from the means for heating primary material 19. In particular, step 200 of generating further H- ions can be associated with an adjustment step 300 the thermal energy that is generated. This adjustment step 300 is optional, and for this reason it is shown in dashed lies.

Step 200 of generating further H- ions can comprise a step of exciting gas 31 by supplying an amount of energy by means of an energy vector 69.

This energy vector can include ionizing radiations, which can be of different natures and of different frequencies. In an exemplary embodiment, the radiation can be a radiofrequency, of a wavelength set between some hundreds of metres and 0.8 micron. In particular, the radiation can be a microwave that can be produced by conventional devices such as Magnetron-type thermionic valves. In other embodiments, the ionizing radiation can be a light radiation coming from concentrated spot power lamps or a laser system. In alternatively, or in addition, the ionizing radiation can be a UV radiation, an X-radiation, an α-radiation, a β-radiation, a γ-radiation. These radiations can be produced by conventional techniques, which are well known to a skilled person.

In an exemplary embodiment, step 200 of generating further H- ions can provide a step of prearranging a material that naturally emits α-particles proximate to the active core, such as Po, Th, U, Pu, Am and the transuranic metals in general.

In another exemplary embodiment, energy vector 69 to provide step 200 of generating further H- ions by supplying an amount of energy can include beams of particles of a predetermined energy level. For instance, such beams of particles can comprise particles such as protons, hyperons, mesons, leptons. For example, such beams of particles can comprise accelerated ions of any element of Mendeleev's table, preferably accelerated ions of metal atoms. These particles can be produced by conventional techniques, which are well known to a skilled person.

The supply of the energy vector can be a continuous supply that takes place in a predetermined time interval, and can be carried out at a fixed or variable intensity of the energy vector. The supply of energy vector 69 can also be of an intermittent or impulsive type. For instance, the radiations of the above indicated types, or the beams of particles, can be supplied at a fixed or at a time-variable power, or can be supplied impulsively or intermittently at one or more power value/s in each or in a plurality of pulses.

In particular, step 300 of modulating generated thermal energy q and removed thermal power Q, which is associated with step 200 of generating further H- ions, can be carried out by changing the intensity of the ionizing radiation and/or by changing the intensity of the supply of particles.

Alternatively, as diagrammatically shown in Fig. 5, detail (d2), protons ¹H⁺ 35' can experience a step of expulsion due to a Coulomb repulsion from nucleus 38' of the transition metal. This way, these protons can give rise to protons 35" expelled from respective atoms 38 where the orbital capture has occurred (Fig. 4). More in detail, if the transformation of H- ions 35 into protons ¹H⁺ 35' is carried out at a distance longer than the distance that allows the nuclear capture, i.e. at a distance longer than about 10⁻¹⁴ m, protons ¹H⁺ 35" are expelled at a predetermined energy, which can be measured by a cloud chamber measurement. This depends upon the Coulomb repulsion between protons ¹H⁺ 35' and nucleus 38'. The energy of expelled protons 35" is about 6.7 MeV, as it can be calculated, and as it is confirmed by tests according to the above indicated technique.

A part of expelled protons 35" due to Coulomb repulsion can interact with other nuclei of the same cluster 21 where they have been formed, or expelled protons 35" can engage also with nuclei of a different cluster 21.

Still with reference to Fig. 5, details d2, e2, a part of protons 35" expelled from respective nuclei 28 in which the orbital capture has occurred (Figs. 4 and 5), which do not react with other nuclei of primary material 19, can leave primary material 19 as emitted protons 35"'.

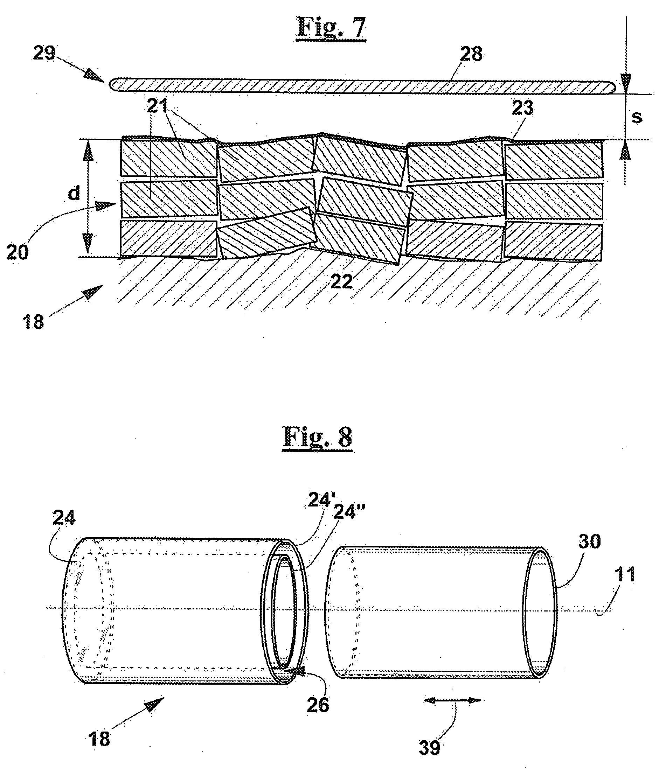

As diagrammatically shown in Fig. 7, step 200 of generating further H-ions can comprise a step of prearranging an amount of a particular secondary material 28 proximate to active core 18. Secondary material 28 is a material adapted to interact with protons that have an energy higher than a predetermined energy threshold, according to nuclear proton-dependent reactions, hereinafter indicated also as secondary reactions, which occur with a release of radiations 49 (Fig. 5), in particular with a release of an α-radiation and/or of an β-radiation and/or of a γ-radiation, and/or with a release of high energy particles 49.

Secondary material 28 is arranged in front of, i.e. it faces surface 23 of active core 18, i.e. it faces clusters 21. In other words, a hypothetic observer integral to surface 23 would be able to see secondary material 28. Secondary material 28 is arranged at a predetermined distance S from surface 23 of active core 18, which is small enough to allow the radiations emitted to reach the hydrogen molecules 31 that are located proximate to the transition metal. This way, H- ions 35 are produced that are available for orbital capture by the atoms of clusters 21. The maximum value S* of the distance S at which the secondary material has to be present is a few millimetres.

Secondary material 28 can have the shape of a sheet 29, or can have a different shape, as in an exemplary embodiments described more in detail hereinafter.

This way, secondary material 28 can be reached by protons 35"' that come from clusters 21 of active core 18, as described above, during and because of the step 150 of orbital capture. Emitted protons 35'" must reach secondary material 28. To this purpose, the distance between clusters 21 and secondary material 28 muss be shorter than the length of the mean free path that the protons ¹H⁺ are able to run before reverting to atomic hydrogen. In the case of Nickel, the emitted protons can achieve an energy of about 6.7 MeV. At a hydrogen pressure between 150 and 800 mbar, the mean free path is about 7.5 cm. Therefore this condition is fulfilled with the condition S<S*, as indicated above.

In particular, secondary material 28 can comprise Lithium. In nature, Lithium contains stable ⁷Li isotope, which is about 92.4%, and stable ⁶Li isotope, which is about 7.6%. The possible proton-dependent reactions are the following:

- ¹H + ⁷Li -> 8Be(α) + 17.255 MeV {2a}

- ¹H + ⁷Li -> ⁴He + ⁴He + 17.347 MeV {2b}

- ¹H + ⁶Li -> ⁷Be + 5.606 MeV {3a}

- ¹H + ⁶Li -> ³He + ⁴He + 4.019 MeV {3b},

In addition, or in alternative, secondary material 28 is Boron. In nature, Boron contains the stable ¹¹B isotope, which is about 81.2% and stable isotope ¹⁰B which is about 19.8%. The possible proton-dependent reactions are the following:

- ¹H + ¹¹B -> ¹²C + 15.957 MeV {4a}

- ¹H + ¹¹B -> ⁴He + ⁸Be(α) + 8.590 MeV {4b}

- ¹H + ¹⁰B -> ¹¹C + 8.689 MeV {5a}

- ¹H + ¹⁰B -> ⁴He + ⁷Be + 1.145 MeV {5b},

Among these reactions, {2b}, {3b}, {2a}, {4b}, {5b} occur with production of α-particles, which are indicated as ⁴₂He²⁺, ⁸Be, as well as with production of energy. The α-particles generated according to these reactions reach the transition metal of the active core and increase the formation rate of H- ions 35, and then increase the rate at which the orbital capture reactions and the nuclear capture reactions take place. For this reason, thermal energy q generated per time unit increases. This remarkably increases the energy production rate of the method based on anharmonic stimulated fusion of H- and a transition metal (FASEC), and the energy production rate of a proton-based device or reactor exploiting this method.

In turn, the α-particles generated according some of the above reactions can also cause nuclear reactions with ¹⁰B,

- ⁴₂He²⁺ + ¹¹B -> ¹⁵N + 10.991 MeV {6a};

- ⁴₂He²⁺ + ¹¹B -> n(β⁻) + ¹⁴N + 0.158 MeV {6b};

- ⁴₂He²⁺ + ¹¹B -> ¹H⁺ + ¹⁴C(β⁻) + 0.784 MeV {6c};

- ⁴₂He²⁺ + ¹⁰B -> ¹⁴N + 11.612 MeV {7a};

- ⁴₂He²⁺ + ¹⁰B -> n(β⁻) + ¹³N (β⁺) + 1.059 MeV {7b};

- ⁴₂He²⁺ + ¹⁰B -> ¹H⁺ + ¹³C + 4.062 MeV {7c};

- ⁴₂He²⁺ + ¹⁰B -> ²H + ¹²C + 1.340 MeV {7d},

some of which ({6b}, {6c}, {7b}, {7c}) occur with a production of radiations that are useful for ionizing the hydrogen, which generates further H- ions.

In addition, or in alternative, secondary material 28 can be a transition metal, which can belong to the d-block of the periodic table, or can belong to the f-block, which are formed by the Lanthanoids and by the Actinoides. In particular, in the case of ²³²Th, ²³⁶U, ²³⁹U, which are the ancestor isotopes of respective natural decay chains, or in the case of ²³⁹Pu, which is the ancestor isotope of an artificial decay chain, the proton-dependent reactions can be, respectively:

¹H⁺ + ²³²Th -> ²³³Pa(β⁻) + 5.249 MeV {8a}

¹H⁺ + ²³⁵U -> ²³⁶Np(β⁻) + 4.833 MeV {8b}

¹H⁺ + ²³⁸U -> ²³⁹Np(β⁻) + 5.287 MeV {8c}

¹H⁺ + ²³⁹Pu(α)-> ²⁴⁰Am(β⁺) + 4.372 MeV {8d}

As said above, the α-particles generated according to reactions {2b}, {2d}, {4b}, {4d} can lead to α-dependent reactions with the metal of the primary material. For instance, in the case of Nickel the following reactions can take place:

⁴₂He²⁺ + ⁵⁸Ni-> ⁶²Zn(β⁺) + 3.369 MeV {9a}

⁴₂He²⁺ + ⁶⁰Ni-> ⁶⁴Zn + 3.952 MeV {9b}

⁴₂He²⁺ + ⁶¹Ni-> ⁶⁵Zn(β⁺) + 4.116 MeV {9c}

⁴₂He²⁺ + ⁶² Ni-> ⁶⁶Zn + 4.579 MeV {9d}

⁴₂He²⁺ +⁶⁴Ni-> ⁶⁸Zn + 5.333 MeV {9e}.

Some of these reactions ({9a}, {9c}, {7b}, {7c}) occur with a production of radiations that are useful for ionizing the hydrogen, which generates further H-ions.

If the H- ions formation rate is increased by secondary reactions, step 300 (Fig. 1) of adjusting the generated thermal energy comprises a step of changing the amount of secondary material 28 that can be reached by protons 35'" coming from cluster structure 20 of the transition metal, i.e. from the active core. Still with reference to Fig. 7, this amount of secondary material 28 is proportional to the portion of surface 29 of material 28 that is located within a maximum distance S* from active core 18.

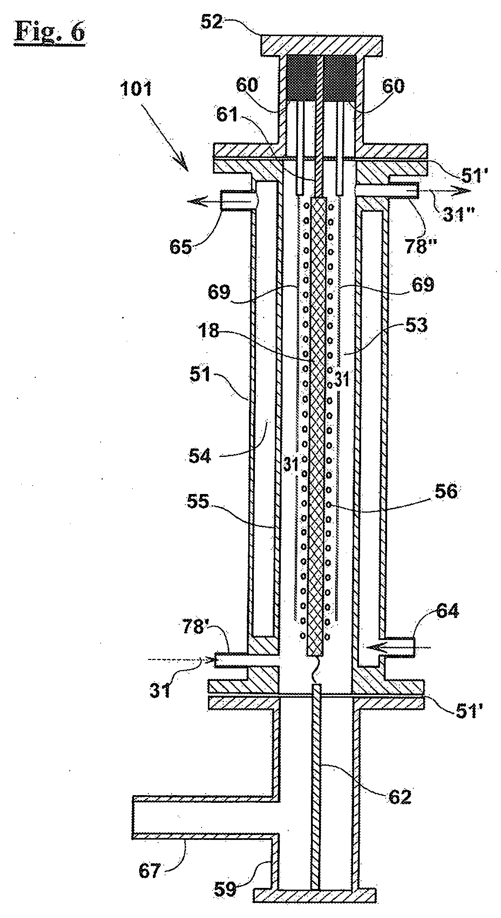

In Fig. 6, an energy generator 101 is shown according to invention, in which the ionization means comprises a means 60 for supplying an energy vector 69 to hydrogen. Generator 101 has an active core 18 that comprises:
- an amount of a primary material, comprising in turn crystals of a transition metal in the form of micro-nanometric clusters, wherein the clusters have generally a number of atoms of the transition metal lower than a predetermined number of atoms;
- H- ions that are available for a subsequent step of orbital capture by the atoms of the transition metal.

Active core 18 has in this case an elongated shape, for example a cylinder shape or the shape of a small bar. Active core 18 is arranged within an elongated generation chamber 53, which is defined by a heat transfer wall 55, preferably in a central position. A substantially annular heat transfer chamber 54 is formed out of heat transfer wall 55, and is in turn defined by a preferably cylindrical external wall 51. In particular, elongated chamber 53 and heat transfer chamber 54 can have a cylindrical shape.

Generation chamber 53 has an inlet port 78' and an outlet port 78" for gaseous hydrogen 31 (Fig. 3). In this case, ports 78', 78" are made at opposite end portions of generation chamber 53.

Heat transfer chamber 54 has an inlet port 64 and an outlet port 65 for a heat-exchange fluid, at opposite end portions of generation chamber 53. The heat-exchange fluid, not shown, withdraws in use thermal power Q derived from thermal energy q associated with the reaction heat of the reactions involved. In an exemplary embodiment, as shown, generation chamber 53 is closed at its ends by a first bonnet 52 and of a second bonnet 59. The bonnets 52, 59 can be mechanically connected to generation chamber 53 by preferably conventional demountable connection means, for example by flanges 51'.

In the exemplary embodiment, as represented, a means is provided for preheating the active core, said means comprising an electric winding 56, which in use is connected to a voltage source, not shown, such that a predetermined current flows along winding 56. Winding 56 has such a size that the current develops a thermal power suitable for heating active core 18, in a determined and industrially acceptable time, from a first temperature, typically from room temperature, up to a second temperature or to an initial process temperature. The initial process temperature is higher than a determined critical temperature, which depends, in particular, upon the transition metal of the primary material.

Preheating means 56 is arranged to establish a thermal gradient, according to a predetermined direction, in active core 18, in particular a thermal gradient set between 50 and 150°C.

Generator 101 also comprises a trigger means of the orbital capture process of H- ions by the transition metal of active core 18. In the exemplary embodiment of Fig. 6, the trigger means comprises electrodes 61,62, which are arranged to impulsively apply an electric voltage at the end of active core 18. This way, an electric current pulse is created through an electrostrictive portion, not shown, of active core 18. In the depicted exemplary embodiment, electrodes 61,62 extend from bonnets 52,59, respectively, and have a means for supporting and keeping active core 18 at its position within generation chamber 53.

Figure 6 also diagrammatically show a trigger means 67 that can be provided in alternative or in addition to electrodes 61,62. Trigger means 67 is arranged to cast a laser pulse on the active core.

As mentioned above, a means 60 for supplying an energy vector 69 is arranged within bonnet 52. Energy vector 69 can include, for instance, radiations such as a UV - radiation, a X - radiation, a α - radiation, a β - radiation, a γ - radiation, or beams of particles such as protons, hyperons, mesons, leptons, accelerated ions.

In alternative, or in addition to supply means 60, a containing element of active core 18 such as the heat transfer wall 55 can contain small plates, not represented, which globally comprise a predetermined amount of a secondary material adapted to capture protons that have an energy equal to or higher than a predetermined energy threshold.

As mentioned above, the secondary material interacts with protons 35"' that come from active core 18 according to nuclear proton-dependent reactions, some of which occur with production of radiations and/or with production of particles that are useful for increasing the H- ions formation rate.

In an exemplary embodiment, not shown, the generation chamber containment wall 55 of the generation chamber can have an inner coating comprising a layer of the secondary material. The layer of secondary material can be possibly restored after it has been exhausted, to begin a new cycle of reactor 101.

In another exemplary embodiment, containment wall 55 of,the generation chamber is made of an alloy that at least superficially contains secondary material. For example, wall 55 can be made in an amorphous alloy of Boron and/or Lithium, as the secondary material, and of Fe or Ni as the structural material. The latter can be the alloy Fe/B 80/20%, or an alloy obtained by adding to this alloy another structural metal and/or another secondary metal.

The number for time unit, or rate, of reactions between protons ¹H⁺ 35"' and secondary material 28 changes responsive to the amount of secondary material that is arranged within maximum distance S*. Accordingly, the intensity of the radiations and/or the amount of particles that are generated by these reactions changes between a minimum value, when the amount of secondary material 28 arranged within maximum distance S* is at a minimum, and a maximum value, when this amount is at a maximum. Accordingly, the increase of H- ions formation rate in the primary material, and the increase of thermal energy generation, changes between a minimum value and a maximum value.

Therefore, besides being useful to improve and upgrade a generator of the type described in WO2010058288, secondary material 28 also allows adjusting generated thermal energy q and delivered thermal power Q.

Fig. 8 diagrammatically shows an active core 18 according to another exemplary embodiment of the invention, where active core 18 comprises two primary elements consisting of a first tubular body 24' and of a second tubular body 24". Tubular bodies 24' and 24" are concentrically arranged about a longitudinal axis 11, and comprise an amount of transition metal 19. Tubular bodies 24' and 24" have a thickness that is very small with respect to their diameter. Tubular bodies 24' and 24" have a common basis 24 that can have the shape of a circle or of an annulus and that comprises a boundary portion of a plane cross section of second external tubular body 24". This way, first tubular body 24' and second tubular body 24" are connected to each other in a determined relative position. The relative position of two tubular bodies 24' and 24" can also be connected by a different mutual fixing means, for instance by a plurality of radial elements, not shown, set between two tubular bodies 24' and 24", and integral to both tubular bodies 24' and 24".

Fig. 8 also shows a secondary element consisting of an adjustment body, which in this exemplary embodiment is a tubular body 30, and is arranged to be slidingly inserted into gap 26 between two tubular bodies 24' and 24" of active core 18. Adjustment body 30 comprises an amount of secondary material adapted to capture and to interact with high energy protons 35"' that are emitted by active core 18. A displacement means, not shown, is also provided for displacing adjustment body 30 within gap 26 along a direction indicated by arrow 39, parallel to longitudinal axis 11. The displacement means allow adjusting the amount of exposed secondary material, i.e. the amount of the secondary material that can be attained by high energy protons 35"' emitted by active core 18. This way, by a predetermined relative movement of adjustment body 30 and of active core 18, a corresponding increase/decrease of the energy delivered by the generator can be obtained.

Obviously, the shape of Fig. 8 is only exemplary and is not limitative, and the arrangement Fig. 8 can be generalized to the case, not shown, of a single or of a plurality of concentric primary elements or tubular bodies 24', 24",... of active core 18, and to the case of a plurality of concentric secondary elements or tubular bodies 30 of the adjustment body, which have respective diameters such that each primary tubular body or element 24', 24", ... generally interposes between two tubular bodies or secondary elements 30, and vice-versa;

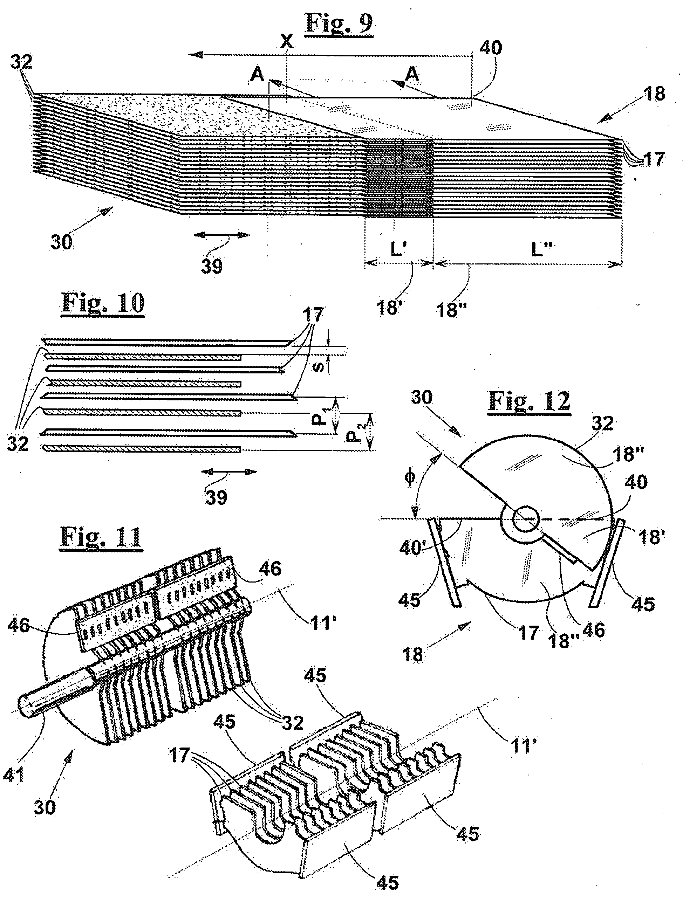

Figs. 9 and 10 diagrammatically show an active core 18 and an adjustment body 30 that comprise a plurality of substantially plane primacy elements 17, and a plurality of substantially plane secondary elements 32, respectively. In an exemplary embodiment, as shown, primary elements 17 and secondary elements 32 are primary and secondary sheet elements. In other words, primary elements 17 are sheet elements made at least in part, with the primary material, i.e. with the transition metal in the form of micro-nanometric cluster, while secondary elements 32 are sheet elements made at least in part with the secondary material. Sheet elements 17 and 32 can obviously have any shape, even different from the rectangular shape shown in Fig. 9. If necessary, a stretch means, not shown, can be provided to keep sheet elements 17 and/or sheet elements 32 in a planar configuration. The stretch means can comprise, for example, stiff frames or different stiffening elements. Primary sheet elements 17 are preferably integral to one another, as well as secondary sheet elements 32. Sheet elements 17 and 32 are arranged such that each primary sheet element 17 slidingly interposes between two secondary sheet elements 32, and that each secondary sheet elements 32 slidingly interposes between two primary sheet elements 17, obviously apart from the side primary and/or secondary sheet elements of the two pluralities. In other words, primary sheet elements 17 of active core 18 and secondary sheet elements 32 of adjustment body 30 are at least in part interfolded. The pitch P₁ between primary sheet elements 17 has preferably one value and is equal to the pitch P₂ between secondary sheet elements 32, which is also substantially the same for all secondary sheet elements 32. The distance I between at least one portion of each secondary sheet elements 17 and corresponding portions of adjacent secondary sheet elements 32, as well as the distance between at least one portion of each secondary sheet elements 32 and corresponding portions of adjacent primary sheet elements 17, is approximately equal to the half of the pitch P common to the sheet elements of the two pluralities, minus the sum of the halves of the thicknesses of sheet elements 17 and 32. Such distance S is shorter than the predetermined maximum distance S*, beyond which radiations and particles generated by the secondary material by means of proton-dependent reactions cannot interact with the hydrogen close to the clusters of primary material, and cannot therefore cause a further H- ions formation.

In an exemplary embodiment, an adjustment means is also provided which comprises a relative slide means for causing a relative slide movement between primary sheet elements 17 and secondary sheet elements 32, along a direction that is indicated by arrow 39 and is parallel to both parallel primary sheet elements 17 and secondary sheet elements 32.

As shown still in Fig. 9, when adjustment body 30 is located at a coordinate X with respect to one end 40 of active core 18, active core 18 is divided into a portion 18', in which sheet elements 32 of adjustment body 30 are facing the closest primary sheet elements of active core 18 and are located at a distance S, and into a portion 18", in which, apart from a small zone proximate to portion 18', the distance between primary sheet elements 17 and secondary sheet elements 32 that face primary sheet elements 17, and vice-versa, is larger than a maximum distance S*.

The relative slide means, not shown, allow adjusting the mutual extension of portions 18' and 18". In other words, they allow integrally adjusting respective surface portions of each secondary element 32 that faces the closest primary elements 17. This way, it is possible to adjust the amount of secondary material that is arranged at a distance S shorter than a maximum distance S*, to provide a control of the secondary proton-dependent reactions between these emitted protons and the secondary material. Therefore, by adjusting the increase of H-ions formation rate caused by the radiations and/or by the particles generated by the proton-dependent reactions, it is possible to adjust the power Q generated by the generator.

Fig. 11 diagrammatically shows an active core 18 and an adjustment body 30 that comprise a plurality of substantially plane primary elements 17, and a plurality of substantially plane secondary elements 32, respectively, in the form of primary sheet elements 17 and of secondary sheet elements 32, which are at least in part made of the primary material and of the secondary material, respectively. Sheet elements 17 and 32 can obviously have any shape, but the circular sector shape of Fig. 11 is preferred. A stretch means, for example of the type indicated when describing Fig. 9, can be provided to keep primary sheet elements 17 and/or secondary sheet elements 32 in a planar configuration. Moreover, in the exemplary embodiment of Fig. 11, mutual fastening elements 45 and 46 are provided for primary sheet elements 17 and for secondary sheet elements 32, respectively. This way, primary sheet elements 17 are integral to one another, as well as secondary sheet elements 32. Sheet elements 17 and 32 are arranged in such a way that each primary sheet 17 slidingly interposes between two secondary sheet elements 32, and that each secondary sheet 32 slidingly interposes between two primary sheet elements 17. Even in this case, pitches P₁ and P₂ between primary sheet elements 17 and secondary sheet elements 32, respectively, are preferably the same pitch for each primary sheet 17 and for each primary sheet 32, respectively, and/or they are preferably equal to a pitch P common to primary sheet elements 17 and to secondary sheet elements 32. Distance S between at least one portion of each secondary sheet 17 and corresponding portions of closest secondary sheet elements 32, as well as the distance between at least one portion of each secondary sheet 32 and corresponding portions the closest primary sheet elements 17 is about one half the common pitch P, minus the halves of the thicknesses of sheet elements 17 and 32. Distance S is shorter than predetermined maximum distance S*.

In a possible exemplary embodiment, adjustment means is also provided which comprise a relative rotation means between primary sheet elements 17 and secondary sheet elements 32, about a common rotation axis 11'.

As shown in Fig. 12, when adjustment body 30 is located at an angular coordinate ϕ with respect to one end 40 of active core 18, active core 18 is divided into a portion 18', in which sheet elements 32 of adjustment body 30 face closest primary sheet elements 17 of active core 18 and are located at a distance S, and into a portion 18", in which the distance between primary sheet elements 17 and closest secondary sheet elements 32, and vice-versa, is generally longer than a maximum distance S*. In portion 18", the reactions between high energy protons 35"' emitted by the primary material of active core 18 and the secondary material of adjustment body 30 cannot therefore take place.

The relative rotation means can comprise a motor means, not shown, which act on a shaft 41, on which secondary sheet elements 32 are keyed. The relative rotation means allows adjusting the mutual extension L', L" of portions 18' and 18". This way, it is possible to adjust the amount of secondary material that is arranged at a distance S shorter than a maximum distance S*, to adjust secondary reactions between emitted protons 35"' and the secondary material. Accordingly, by adjusting the increase of H- ions formation rate caused by the radiations and/or by the particles generated by the proton-dependent reactions, it is possible to adjust the power Q generated by the generator;

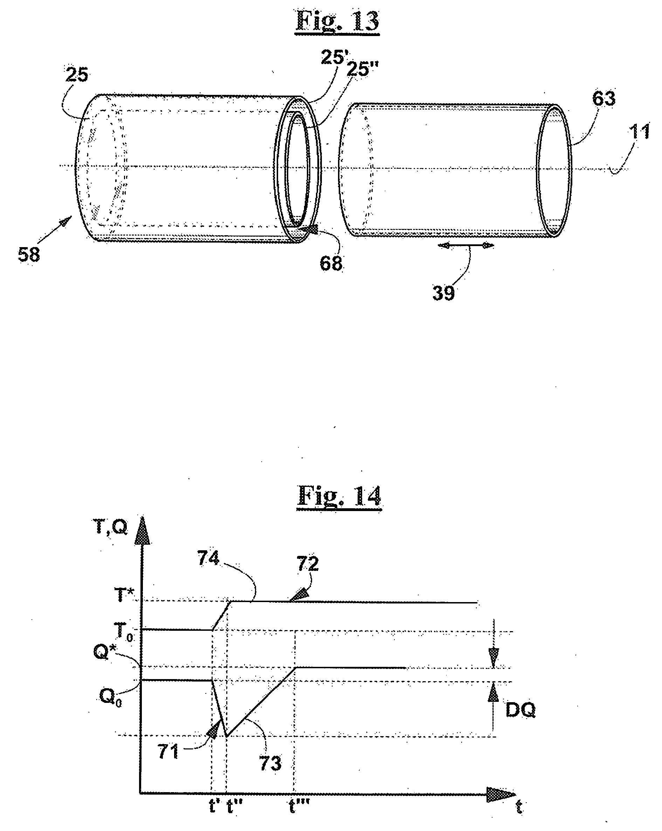

Fig. 13 diagrammatically shows an elementary generation cell 58 of a device according to a further exemplary embodiment of the invention, wherein a primary element 25' and a secondary element 25" are provided which have the shape of tubular bodies. The primary element 25' comprises cluster nanostructures of a transition metal, and the secondary element 25" has an amount of a secondary metal on its own external surface, therefore the secondary material faces the primary element 25'. Tubular bodies 25', 25" are concentrically arranged about a longitudinal axis 11, and have a thickness that is very small with respect to the diameter. Tubular bodies 25' and 25" have a common basis 25 that can have the shape of a circle or of an annulus and that comprises a boundary portion of a plane cross section of second external tubular body 25". This way, first tubular body 25' and second tubular body 25" are connected to each other at a determined relative position. The relative position of two tubular bodies 25' and 25" can also be fixed by a different mutual fixing means, for instance by a plurality of radial elements, not shown, interposed between two tubular bodies 25' and 25" and integral to both tubular bodies 25' and 25".

Fig. 13 also shows an adjustment element 63 that, in this exemplary embodiment, is a shield body of tubular shape, which is arranged to be slidingly inserted into the gap 68 between two tubular bodies 25' and 25". Shield body 63 is made of a material and with a thickness suitable for blocking the protons that are emitted by the clusters of the primary material of primary tubular body 25'. A displacement means, not shown, is also provided for displacing shield body 63 within gap 68. This displacement means allows adjusting the amount of the exposed secondary material, i.e. the amount of the secondary material that can be attained by protons 35"' emitted by the clusters of the transition metal of primary tubular body 25'. This way, with a predetermined relative movement of adjustment shield body 68, on the one hand, and of tubular bodies 25' and 25", on the other hand, and of tubular bodies 25' and 25", on the other hand, a corresponding increase/decrease of the energy delivered by the generator can be obtained..

The arrangement Fig. 13 can be obviously generalized as indicated when describing Fig. 8, i.e. by providing more than one couple of primary and secondary tubular bodies 25' and 25" and more than one shield body 63.

Similarly obviously, new exemplary embodiments can be deducted from Figs. 9, 10, 11 in which the substantially parallel elements 32 are, in alternance, primary elements and secondary elements, and the elements 17 are shield elements, i.e. elements configured to block the travel of protons, or vice-versa. Obviously, if an adjustment means is provided comprising a translation means or a rotation means, the rate of the proton-dependent reactions changes in an opposite direction with respect to what described above. In other words, the rate of the proton-dependent reactions changes from a minimum value, when the primary/secondary elements 32 and the shield elements 17 are fully overlapped, to a maximum value when the shield elements 17 are out of the spaces between primary/secondary elements 32.

The diagram of Fig. 14 shows temperature T of Active core (curve 74) and thermal power Q removed from active core 18 (curve 73) versus time t. With reference to this diagram, an exemplary embodiment is shown of the method according to the invention, in which step 200 of generating further H- ions comprises:
- a step 71 of reducing the removal of thermal power Q starting from a steady-state removed power Q₀: the reduction of removed power Q causes an increase of the temperature T of primary material 19 from a working temperature To to an increased temperature T*. This way, the formation rate of H- ions increases due to the temperature increase;
- a step 72 of maintaining increased temperature T* of the primary material by a corresponding increase of thermal power removal.

Step 72 of maintaining increased temperature T is a controlled transient state in which power Q removal increases by an amount DQ and reaches a value Q* higher than steady-state removed power Q₀.

The increase of temperature T can also be caused by lowering the pressure of hydrogen 31 that is in contact with active core 18, for example by creating a vacuum degree in a generation chamber which houses active core 18 and hydrogen 31. This way, an increase of generated thermal energy q and of removed thermal power Q can be obtained.

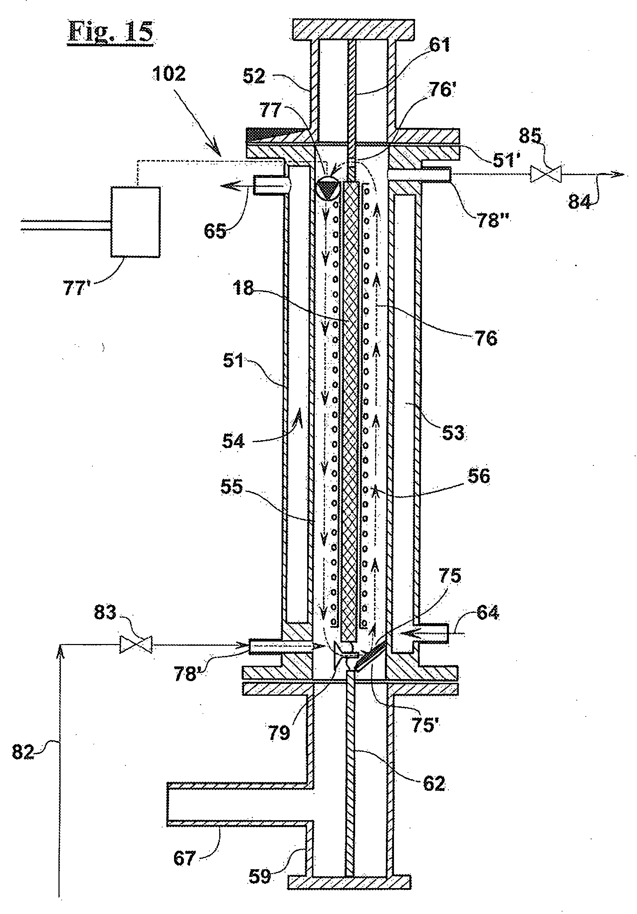

Fig. 15 diagrammatically shows a cross sectional view of an energy generator 102 according to an exemplary embodiment of the invention, in which a gas ionizing means is provided comprising an electron-donor material 75. The latter comprises an electron-donor chemical element that can be selected from the group consisting of: the elements of the group IA and of the group IIA of Mendeleev's periodic table, which have Pauling electronegativity in absolute value lower than or equal to 1. In particular, it can be selected among Cesium, Barium, Strontium, Rubidium, Lithium, Sodium, calcium, Potassium, Francium, Radium or a combination of these with a second chemical element of electronegativity higher than 1.

Generator 102 has the same features of generator 101, apart from the means 60 for supplying a ionising energy vector 69, which can optionally belong to generator 102.

In generator 102, hydrogen inlet and outlet ports 78', 78" into/out of generation chamber 53 are made at opposite ends of generation chamber 53. Inlet and outlet ports 78', 78" are connected to respective gaseous hydrogen feed/removal ducts 82, 84, along which respective feed/removal valves 83, 85 are arranged. Generation chamber 53 comprises an annular path 76 for the gas around active core 18. In an exemplary embodiment, within generation chamber 53, along annular path 76, a means 77 is provided for creating and maintaining a circulation 31' of hydrogen 31 in generation chamber 53, along annular path 76. The circulation means can comprise a fan 77 that is adapted to operate in the presence of hydrogen. For operating and controlling fan 77, a magnetic coupling means can be provided comprise a drive portion arranged about generation chamber 53.

Along path 76 of gas 31 within generation chamber 53, an electron-donor material 75 can be arranged, by a substrate or support 75'. Electron-donor material 75 preferably includes elements that have a Pauling electronegativity, in absolute value, lower than 1. In particular, electron-donor material 75 can comprise an alkaline metals or an alkaline-earth metal, in particular Cesium. In addition to such a metal, electron-donor material 75 can include even a less electronegative different elements, which is selected in such way that the absolute value of Pauling electronegativity is lower than 1. Proximate to substrate 75' a means 79 is preferably provided for conveying hydrogen 31 to electron-donor material 75, which is arranged such that hydrogen 31 hits on electron-donor material 75. This way, an amount of hydrogen H₂ molecules, taking electrons away from the electron-donor material, forms H⁻ hydrogen ions which are added to those that are formed in the steps of adsorption and thermal stabilisation of hydrogen molecules on the cluster surface 21 (Fig. 3).

Duct 82 and valve 83 can be used for loading hydrogen into generation chamber 53 one or several times during the service life of device 102. In alternatively, duct 82 and valve 83 can be used for feeding a continuous or intermittent controlled flow of hydrogen 31 into generation chamber 53. Similarly, duct 84 and valve 85 can be used for removing hydrogen from generation chamber 53 one or several times during the service life of device 102. In alternatively, duct 84 and valve 85 can be used for removing or bleeding a continuous or intermittent controlled flow of gas 31" from generation chamber 53 (Fig. 6). In particular, a continuously or intermittently operable bleed means 78", 84, 85 can be provided for bleeding an amount of gas, and a make-up means 78', 82, 83 for making up an amount of hydrogen corresponding to the bled amount, in order to prevent unwanted substances from piling up in the gas within generation chamber 53, in particular to prevent accumulation of atomic helium.

In an exemplary embodiment, a means for modulating the flowrate of the circulation 31' of hydrogen 31 is associated with fan 77. This means for changing the flowrate can comprise an inverter 77'. In an exemplary embodiment, not shown, the means for changing the flowrate can comprise a variable-section passage along annular path 76 of generation chamber 53, for example a variable orifice defined by a valve.

In the exemplary embodiment as depicted, electrodes 61, 62, or the support and position fixing means of active core 18 within generation chamber 53, have recess or passage 76' to ensure the circulation of hydrogen 31 along annular path 76.

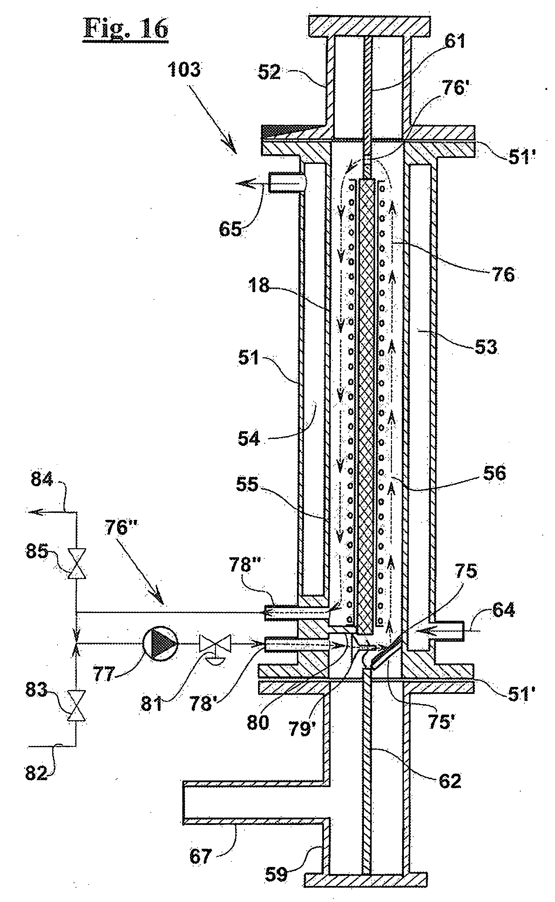

Fig. 16 diagrammatically shows a longitudinal cross section of an energy generator 103 in which a gas ionizing means is provided comprising an electron-donor material 75. This exemplary embodiment differs from the exemplary embodiment of generator 102 as described below. Generator 103 has a generation chamber 53 equipped with a gas inlet port 78' and with a gas outlet port 78" that are made proximate to each other. Within generation chamber 53, gas inlet port 78' and gas outlet port 78" are separated from each other by a substantially gas-tight dividing wall 80. Annular path 76 comprises a ring 76" out of generation chamber 53, which connects outlet port 78" with inlet port 78'. A fan 77, adapted to work in the presence of hydrogen, is arranged along outer ring 76". A regulation valve 81 can also be provided for modulating the flowrate of hydrogen 31 along the whole annular path 76. Even in this case, in order to modulate the flowrate of hydrogen 31, an inverter 77' (Fig. 15) can be provided, in which case regulation valve 81 can be omitted. In an exemplary embodiment as depicted, regulation valve 81 is arranged downstream of fan 77. Hydrogen feed or make-up and removal or bleed ducts 82, 84 into/away from generation chamber 53 are in pneumatic communication with outer ring 76", and are sequentially arranged with respect to the flow direction of hydrogen 31 along outer ring 76";

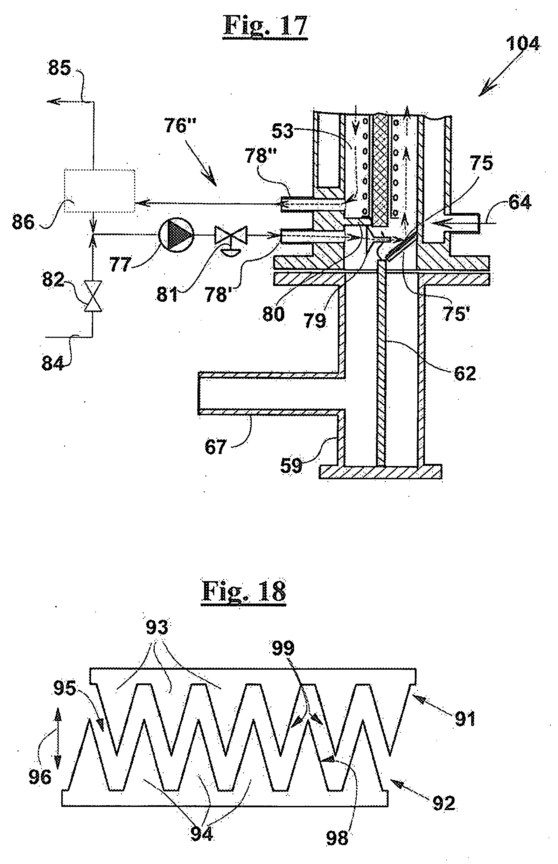

Fig. 17 diagrammatically shows a longitudinal partial cross sectional view of an energy generator 104 in which a gas ionizing means is provided comprising an electron-donor material 75, according to another further exemplary embodiment. This exemplary embodiment differs from generator 103 as described below. In this case, a means 86 is provided for separating the helium that is present in the hydrogen stream at the outlet of generation chamber 53 through outlet port 78", and for recycling the hydrogen purified from helium into generation chamber 53 through fan 77 and inlet port 78'. The separation means can comprise, for instance, a molecular sieve or a palladium filter.

Even if an active core 18 is shown in generators 101, 102, 103 and 104 of Figs. 6, 15, 16 and 17 consisting of a single elongated body, active core 18 can be formed by a plurality of elongated bodies, or in any case by a plurality of bodies that allow making an annular path similar to annular path 76.

Some parts of generators 101, 102, 103 and 104, in particular containment and heat exchange wall 55, can be made of a transition metal, preferably of the transition metal of active core 18, in order to prevent differential galvanic corrosion and to allow a further energy production by interaction of the protons emitted by the core with the transition metal.

With reference to Fig. 18, a surface structure is described of an active core 91, and of a substrate or support 92. The surface of active core 91, according to the invention, has a layer 99 of micro-nanometric clusters 21, while the surface of support 92 has a layer 98 of an electron-donor material of the type indicated when describing, for instance, generator 102 of Fig. 15. The surfaces of active core 91 and of substrate 92 have a relief structure 93, 94, on which layers 99 and 98 are arranged. Relief elements can be provided as regular reliefs or notches, as shown in Fig. 13, for example cones or pyramids and frustums thereof, but they can also be irregular or mixed reliefs or notches. Between the surface of active core 91 and the surface of support 92 a gap 95 is left available to allow hydrogen 31 to be contained or to flow (Fig. 3). A relative movement means is provided, not shown, of active core 91 and of support 92. The relative movement means is arranged to cause a relative movement as indicated by double arrow 96. This way, it is possible to reduce the distance between active core 91 and support 92, i.e. the distance of the clusters of layer 99 and the electron-donor material of layer 98. By decreasing this distance, i.e. by decreasing the thickness of gap 95, the interactions between hydrogen 31 and the electron-donor material increase, and accordingly H- ions formation rate increases in addition to those that are formed on the surface of the layer of clusters as described with reference to Fig. 3. In Fig. 13, the reliefs 93, 94 are enhanced, however their height is preferably of the same order of magnitude ad are the clusters, or one-two order of magnitude larger.

In these conditions, a micrometric relative displacement or stroke, or a shorter displacement, can provide a regulation range that is large enough to adjusting the power delivered by the generator. Such a displacement can even be obtained without mechanical motors or actuators, but by a temperature change of active core 91 and/or of support 92, which greatly simplifies the adjustment means. Furthermore, an impact of hydrogen on the donor material is no more required.

The foregoing description of exemplary embodiments of the method and of the generator according to the invention, and of the way of using the generator, will so fully reveal the invention according to the conceptual point of view, so that others, by applying current knowledge, will be able to modify and/or adapt in various applications this specific exemplary embodiments without further research and without parting from the invention as defined by the offended claims, and, then it is meant that such adaptations and modifications will have to be considered as equivalent to the specific embodiments. The means and the materials to realise the different functions described herein could have a different nature without, for this reason, departing from the field of the invention. It is meant that the expressions or the terminology used have object purely descriptive and, for this, not limitative.

## Claims

1. A method for generating energy by nuclear reactions between hydrogen (31) and a transition metal, said method comprising the steps of:
- prearranging (110) a primary material (19) that comprises said transition metal;
- bringing and keeping said hydrogen (31) into/in contact with said primary material (19);
- heating (130) said primary material (19) up to an initial temperature (T₁) higher than a predetermined critical temperature;
- producing an impulse (140) in said primary material (19), in order to cause a generation of H- ions (35) starting from said hydrogen (31), and to cause capture reactions (150,151) of said H⁻ ions (35) by said primary material (19) thus causing a generation of a thermal energy (q);
- removing (160) a thermal power (Q) deriving from said generated thermal energy (q), while maintaining the temperature of said primary material (19) above said critical temperature,
**characterised in that** a step (200) is provided of generating further H-ions (35) that are available for said capture reactions (150,151), such that the concentration of said H- ions (35) changes from a first concentration value to a second concentration value in said hydrogen (31) which is in contact with said primary material (19), and such that the rate of said capture reactions (150,151) increases and, accordingly, said generation of thermal energy (q) increases up to an increased thermal energy level,
wherein said step (200) of generating further H⁻ ions comprises a step of ionizing said hydrogen (31) which is in contact with said primary material (19); wherein
said step of ionizing said hydrogen (31) is selected from the group comprised of.
- a ionization step comprising:
- prearranging an electron-donor material (75) that comprises at least one electron-donor chemical element, proximate to said primary material (19);
conveying and impacting said hydrogen (31) on said electron-donor material (75);
- a ionization step comprising a step of continuously or variably or discontinuously supplying an energy vector (69) to said hydrogen, said energy vector selected from the group comprised of:
- a ionizing radiation of predetermined nature and frequency;
- particle beams,
- a ionization step comprising
- increasing a temperature (T) of said primary material (19) from a working temperature (T₀) to a predetermined increased temperature (T*), said increased temperature (T*) causing an increase of said H⁻ ions (35) concentration;
- maintaining (72) said increased temperature (T*) of said primary material (19) by increasing said removed thermal power (Q) until an increased steady-state thermal power (Q₀) is attained.

2. A method according to claim 1, wherein said primary material comprises a predetermined amount of cluster crystal nanostructures (21) i.e. clusters (21) of said transition metal, said crystal nanostructures (21) having a number of atoms of the transition metal lower than a determined number of atoms.

3. A method according to claim 1, wherein a step is provided of causing a circulation (31') of a flux of said hydrogen (31) within a generation chamber (53) that contains said primary material (19), such that said hydrogen (31) iteratively carries out said step of conveying and impacting on said electron-donor material
in particular, a step (300) is provided of adjusting said thermal power (Q) comprising step of changing a flow rate of said circulation (31') of said hydrogen (31) within said generation chamber (53).

4. A method according to claim 3, wherein said at least one electron-donor material is selected from the group comprised of: Cesium, Barium, Strontium, Rubidium, Lithium, Sodium, Calcium, Potassium, Francium, Radium, a combination of a first chemical element with a second chemical element such that said electron-donor material (75) has a Pauling electronegativity absolute value lower than 1.

5. A method for generating energy according to claim 1, wherein said energy vector (69) is a ionizing radiation selected from the group comprised of:
- a radiofrequency, in particular microwaves;
- a light radiation;
- a UV - radiation;
- an X - radiation;
- an α - radiation;
- a β - radiation;
- a γ - radiation;
- a combination of the above radiations;

6. A method for generating energy according to claim 1, wherein said energy vector (69) is a beam of particles selected from the group comprised of:
- protons;
- hyperons;
- mesons;
- leptons;
- metal ions;
- a combination of the above particles,

7. A method for generating energy according to claim 1, wherein a step (300) is provided of adjusting said thermal power (Q), comprising a step of changing the intensity of said ionizing radiation and/or of said beam of particles.

8. A method according to claim 1, wherein a step is provided of prearranging a radioactive material proximate to said primary material (19).

9. A method according to claim 1, comprising a step of prearranging (115) an amount of a secondary material (28) facing said primary material (19) within a predetermined maximum distance (S) from said primary material (19), said secondary material (28) adapted to react with protons (35"') of energy higher than a predetermined energy threshold that are generated by proton-dependent nuclear reactions that occur in said primary material (19),
wherein said step of supplying an energy vector (69) is carried out by said radiations and/or said particles released by said proton-dependent nuclear reactions,
in particular, said secondary material is selected among Boron, Lithium and a transition metal, or a combination thereof.

10. A method according to claim 1, wherein said step of increasing T is obtained by a step selected from the group comprised of:
- reducing (71) thermal power removal (Q) starting from a steady-state thermal power (Q₀);
decreasing the pressure of said hydrogen (31) that is in contact with said clusters of said active core (18).

11. An energy generator (101,102,103,104) for obtaining energy by nuclear reactions between hydrogen (31) and a transition metal, said energy generator comprising:
- an active core (18) that includes a predetermined amount of a primary material (19) that comprises said transition metal;
- a generation chamber (53) that contains said active core (18) and is adapted to contain said hydrogen (31) to provide a contact of said hydrogen (31) with said primary material (19);
- a heating means (56) for heating said active core (18) within said generation chamber (53) up to an initial process temperature (T₁) higher than a predetermined critical temperature;
- a trigger means (61,62,67) for producing an impulsive action (140) on said active core (18),
said generation chamber (53) and said trigger means (61,62,67) and/or said heating means (56) adapted to cause an H- ions (35) generation starting from said hydrogen (31), and to cause a capture reaction (150,151) of said H⁻ ions (35) by said primary material (19), thus causing a generation of a thermal energy;
- a means (54) for removing from said generation chamber (53) a thermal power (Q) and for maintaining the temperature (T) of said active core (18) above said critical temperature,
**characterised in that** a means is provided for increasing said H⁻ ions (35) that are available for said capture reactions (150,151), by turning the concentration of said H⁻ ions (35) from a first concentration value to a second concentration value in said hydrogen (31) which is in contact with said primary material (19), such that the rate of said capture reactions (150, 151) and said generation of thermal energy (q) increase, up to an increased thermal energy level,
wherein said means for increasing said H- ions (35) comprises a ionization means for ionizing said hydrogen (31) which is in contact with said primary material (35),
wherein said ionization means is selected from the group comprised of:
- a ionization means comprising:
- an electron-donor material (75) in which an electron-donor chemical element is present selected from the group comprised of: Cs; Ba; Sr; Rb; Li; Na; Ca; K; Fr; Ra, said electron-donor material arranged proximate to said active core (18);
- a means (79) for conveying and impacting said hydrogen to/on said electron-donor material (75),
- a ionization means comprising a means (60) for supplying an energy vector (69) to said hydrogen (31), said energy vector (69) selected from the group comprised of:
- a ionizing radiation of different natures and predetermined frequency;
- a beam of particles;
- a combination thereof;
- a ionization means comprising:
- a means for reducing the steady-state removed thermal power during the step of removing the thermal power, such that the removed power reduction causes a predetermined temperature increase of the primary material, starting from a working temperature until an increased temperature is attained, so that H- ions formation rate increases;
- a means for maintaining the temperature of the primary material at a predetermined temperature value, by increasing the removed power, in particular, in order to restore the working temperature, wherein the removed power achieves a value higher than the steady-state removed power once the working temperature restore step has been accomplished.

12. An energy generator according to claim 11, wherein said primary material comprises a predetermined amount of cluster crystal nanostructures (21) i.e. clusters (21) of said transition metal, said crystal nanostructures (21) having a number of atoms of the transition metal lower than a determined number of atoms,
in particular, said primary material comprises Nickel.

13. An energy generator according to claim 11, wherein said ionization means comprises a circulation means (77) for creating and maintaining a circulation (31') of said hydrogen (31) within said generation chamber (53), such that said hydrogen (31) iteratively is conveyed and iteratively hits said electron-donor material (75) to cause a further transformation of hydrogen (31) into H- ions.

14. An energy generator according to claim 11, wherein said means for supplying an energy vector (69) comprises an amount of a secondary material (28) arranged within a predetermined maximum distance maximum (S) from said primary material (19), said secondary material (28) adapted to react with protons of energy higher than a predetermined energy threshold, such that protons emitted during said orbital capture reaction (150) of said H⁻ ions (35) cause secondary nuclear reactions that occur with a release of said radiations and/or of said particles.

## Patentansprüche

1. Verfahren zum Erzeugen von Energie durch nukleare Reaktionen zwischen Wasserstoff (31) und einem Übergangsmetall, wobei das Verfahren aus den folgenden Schritten besteht:
- Voranordnen (110) eines Primärmaterials (19), das aus dem Übergangsmetall besteht;
- In-Kontakt-bringen und -halten des Wasserstoffs (31) mit dem Primärmaterial (19);
- Erwärmen (130) des Primärmaterials (19) auf eine Anfangstemperatur (T₁) höher als eine vorbestimmte kritische Temperatur;
- Produzieren eines Impulses (140) im Primärmaterial (19), um eine Erzeugung von H⁻-Ionen (35) beginnend vom Wasserstoff (31) zu verursachen und um Einfangsreaktionen (150, 151) der H⁻-Ionen (35) durch das Primärmaterial (19) zu verursachen, wodurch eine Erzeugung einer Wärmeenergie (q) verursacht wird;
- Abführen (160) einer von der Wärmeenergie (q) stammenden Wärmeleistung (Q), während die Temperatur des Primärmaterials (19) über der kritischen Temperatur aufrechterhalten wird,
**dadurch gekennzeichnet, dass** ein Schritt (200) zum Erzeugen von weiteren H⁻-Ionen (35) bereitgestellt ist, die für die Einfangsreaktionen (150, 151) verfügbar sind, so dass sich die Konzentration der H⁻-Ionen (35) von einem ersten Konzentrationswert auf einen zweiten Konzentrationswert im Wasserstoff (31) ändert, der mit dem Primärmaterial (19) in Kontakt ist, und so dass sich die Rate der Einfangsreaktionen (150, 151) erhöht und, demgemäß, die Erzeugung der Wärmeenergie (q) bis zu einem erhöhten Wärmeenergieniveau erhöht,wobei der Schritt (200) zum Erzeugen von weiteren H⁻-Ionen aus einem Schritt zum Ionisieren des Wasserstoffs (31) besteht, der mit dem Primärmaterial (19) in Kontakt ist;
wobei der Schritt zum Ionisieren des Wasserstoffs (31) ausgewählt ist aus der Gruppe bestehend aus:
- einem Ionisationsschritt bestehend aus:
- Voranordnen eines Elektronendonator-Materials (75), das mindestens aus einem chemischen Elektronendonator-Element besteht, nahe dem Primärmaterial (19); Befördern und Einwirken des Wasserstoffs (31) auf das Elektronendonator-Material (75);
- einem Ionisationsschritt bestehend aus einem Schritt zum kontinuierlichen oder variablen oder diskontinuierlichen Liefern eines Energievektors (69) an den Wasserstoff, wobei der Energievektor ausgewählt ist aus der Gruppe bestehend aus:
- einer Ionisierstrahlung von vorbestimmter Art und Frequenz;
- Partikelstrahlen,
- einem Ionisationsschritt bestehend aus:
- Erhöhen einer Temperatur (T) des Primärmaterials (19) von einer Arbeitstemperatur (T₀) auf eine vorbestimmte erhöhte Temperatur (T*), wobei die erhöhte Temperatur (T*) eine Erhöhung der H⁻-Ionen (35)-Konzentration verursacht;
- Aufrechterhalten (72) der erhöhten Temperatur (T*) des Primärmaterials (19) durch Erhöhen der abgeführten Wärmeleistung (Q), bis eine erhöhte Steady-state-Wärmeleistung (Q₀) erreicht wird.

2. Verfahren gemäß Anspruch 1, wobei das Primärmaterial aus einer vorbestimmten Menge von Cluster-Kristall-Nanostrukturen (21) besteht, d. h. Cluster (21) des Übergangsmetalls, wobei die Kristall-Nanostrukturen (21) eine Anzahl von Atomen des Übergangsmetalls niedriger als eine vorbestimmte Anzahl von Atomen aufweisen.

3. Verfahren gemäß Anspruch 1, wobei ein Schritt zum Verursachen einer Zirkulation (31') eines Flusses des Wasserstoffs (31) innerhalb einer Erzeugungskammer (53) bereitgestellt ist, die das Primärmaterial (19) enthält, so dass Wasserstoff (31) iterativ den Schritt zum Befördern und Einwirken auf das Elektronendonator-Material ausführt wobei insbesondere ein Schritt (300) zum Anpassen der Wärmeleistung (Q) bereitgestellt ist, bestehend aus einem Schritt zum Ändern der Flussrate der Zirkulation (31') des Wasserstoffs (31) innerhalb der Erzeugungskammer (53).

4. Verfahren gemäß Anspruch 3, wobei das mindestens eine Elektronendonator-Material ausgewählt ist aus der Gruppe bestehend aus: Cäsium, Barium, Strontium, Rubidium, Lithium, Natrium, Calcium, Kalium, Francium, Radium, einer Kombination eines ersten chemischen Elements mit einem zweiten chemischen Element, so dass das Elektronendonator-Material (75) einen Pauling-Elektronegativität-Absolutwert niedriger als 1 aufweist.

5. Verfahren zum Erzeugen von Energie gemäß Anspruch 1, wobei der Energievektor (69) eine Ionisierstrahlung ist ausgewählt aus der Gruppe bestehend aus:
- einer Hochfrequenz, insbesondere Mikrowellen;
- einer Lichtstrahlung;
- einer UV-Strahlung;
- einer Röntgenstrahlung;
- einer α-Strahlung;
- einer β-Strahlung;
- einer γ-Strahlung;
- einer Kombination der obigen Strahlungen;

6. Verfahren zum Erzeugen von Energie gemäß Anspruch 1, wobei der Energievektor (69) ein Strahl von Partikeln ist ausgewählt aus der Gruppe bestehend aus:
- Protonen;
- Hyperonen;
- Mesonen;
- Leptonen;
- Metallionen;
- eine Kombination der obigen Partikel

7. Verfahren zum Erzeugen von Energie gemäß Anspruch 1, wobei ein Schritt (300) zum Anpassen der Wärmeleistung (Q) bereitgestellt ist, bestehend aus einem Schritt zum Ändern der Intensität der Ionisierstrahlung und/oder des Strahls von Partikeln.

8. Verfahren gemäß Anspruch 1, wobei ein Schritt zum Voranordnen eines radioaktiven Materials nahe dem Primärmaterial (19) bereitgestellt ist.

9. Verfahren gemäß Anspruch 1, bestehend aus einem Schritt zum Voranordnen (115) einer Menge von Sekundärmaterial (28), das dem Primärmaterial (19) zugewandt ist, innerhalb eines vorbestimmten maximalen Abstands (S) vom Primärmaterial (19), wobei das Sekundärmaterial (28) angepasst ist, um mit Protonen (35'") von einer Energie höher als eine vorbestimmte Energieschwelle zu reagieren, die durch protonenabhängige nukleare Reaktionen erzeugt werden, die im Primärmaterial (19) auftreten,
wobei der Schritt zum Liefern eines Energievektors (69) durch die Strahlungen und/oder Partikel, freigesetzt durch die protonenabhängigen nuklearen Reaktionen, ausgeführt wird. wobei insbesondere das Sekundärmaterial ausgewählt ist aus Bor, Lithium und einem Übergangsmetall oder einer Kombination davon.

10. Verfahren gemäß Anspruch 1, wobei der Schritt zum Erhöhen von T erhalten wird durch einen Schritt ausgewählt aus der Gruppe bestehend aus:
- Reduzieren der (71) Wärmeleistungsabfuhr (Q) beginnend von einer Steady-state-Wärmeleistung (Q₀);
Verringern des Drucks des Wasserstoffs (31), der mit den Clustern des aktiven Kerns (18) in Kontakt ist.

11. Energieerzeuger (101, 102, 103, 104) zum Erhalten von Energie durch nukleare Reaktionen zwischen Wasserstoff (31) und einem Übergangsmetall, der Energieerzeuger bestehend aus:
- einem aktiven Kern (18), der eine vorbestimmte Menge eines Primärmaterials (19) einschließt, das aus dem Übergangsmetall besteht;
- einer Erzeugungskammer (53), die den aktiven Kern (18) enthält und angepasst ist, um den Wasserstoff (31) zu enthalten, um einen Kontakt des Wasserstoffs (31) mit dem Primärmaterial (19) bereitzustellen;
- einem Erwärmungsmittel (56) zum Erwärmen des aktiven Kerns (18) innerhalb der Erzeugungskammer (53) auf eine Anfangsprozesstemperatur (T₁) höher als eine vorbestimmte kritische Temperatur;
- einem Auslösemittel (61,62,67) zum Produzieren einer impulsiven Wirkung (140) am aktiven Kern (18),
wobei die Erzeugungskammer (53) und das Auslösemittel (61, 62, 67) und/oder das Erwärmungsmittel (56) angepasst sind, um eine H⁻-Ionen(35)-Erzeugung beginnend vom Wasserstoff (31) zu verursachen und um eine Einfangsreaktion (150, 151) der H⁻-Ionen (35) durch das Primärmaterial (19) zu verursachen, wodurch eine Erzeugung einer Wärmeenergie verursacht wird;
- einem Mittel (54) zum Abführen aus der Erzeugungskammer (53) einer Wärmeleistung (Q) und zum Aufrechterhalten der Temperatur (T) des aktiven Kerns (18) über der kritischen Temperatur,
**dadurch gekennzeichnet, dass** ein Mittel zum Erhöhen der H⁻-Ionen (35) bereitgestellt ist, die für die Einfangsreaktionen (150, 151) zur Verfügung stehen, durch Wechseln der Konzentration der H⁻-Ionen (35) von einem ersten Konzentrationswert auf einen zweiten Konzentrationswert im Wasserstoff (31), der mit dem Primärmaterial (19) in Kontakt ist, so dass sich die Rate der Einfangsreaktionen (150, 151) und die Erzeugung der Wärmeenergie (q) erhöhen, bis zu einem erhöhten Wärmeenergieniveau,
wobei das Mittel zum Erhöhen der H⁻-Ionen (35) aus einem Ionisationsmittel zum Ionisieren des Wasserstoffs (31) besteht, der mit dem Primärmaterial (35) in Kontakt ist,
wobei das Ionisationsmittel ausgewählt ist aus der Gruppe bestehend aus:
- einem Ionisationsmittel bestehend aus:
- einem Elektronendonator-Material (75), in dem ein chemisches Elektronendonator-Element vorliegt ausgewählt aus der Gruppe bestehend aus: Cs; Ba; Sr; Rb; Li; Na; Ca; K; Fr; Ra, wobei das Elektronendonator-Material nahe dem aktiven Kern (18) angeordnet ist;
- einem Mittel (79) zum Befördern und Einwirken des Wasserstoffs auf das Elektronendonator-Material (75),
- einem Ionisationsmittel bestehend aus einem Mittel (60) zum Liefern eines Energievektors (69) an den Wasserstoff (31), wobei der Energievektor (69) ausgewählt ist aus der Gruppe bestehend aus:
- einer Ionisierstrahlung von unterschiedlichen Arten und vorbestimmter Frequenz;
- einem Strahl von Partikeln;
- einer Kombination davon;
- einem Ionisationsmittel bestehend aus:
- einem Mittel zum Reduzieren der abgeführten Steady-state-Wärmeleistung während des Schritts zum Abführen der Wärmeleistung, so dass die Reduzierung der abgeführten Leistung eine vorbestimmte Temperaturerhöhung des Primärmaterial verursacht, beginnend von einer Arbeitstemperatur, bis eine erhöhte Temperatur erreicht wird, so dass sich die H⁻-Ionen-Formationsrate erhöht;
- einem Mittel zum Aufrechterhalten der Temperatur des Primärmaterial auf einem vorbestimmten Temperaturwert, durch Erhöhen der abgeführten Leistung, insbesondere um die Arbeitstemperatur wieder herzustellen, wobei die abgeführte Leistung einen Wert höher als die abgeführte Steady-state-Leistung erreicht, sobald der Arbeitstemperatur-Wiederherstellungsschritt vollzogen worden ist.

12. Energieerzeuger gemäß Anspruch 11, wobei das Primärmaterial aus einer vorbestimmten Menge von Cluster-Kristall-Nanostrukturen (21) besteht, d. h. Cluster (21) des Übergangsmetalls, wobei die Kristall-Nanostrukturen (21) eine Anzahl von Atomen des Übergangsmetalls niedriger als eine vorbestimmte Anzahl von Atomen aufweisen, wobei insbesondere das Primärmaterial aus Nickel besteht.

13. Energieerzeuger gemäß Anspruch 11, wobei das Ionisationsmittel aus einem Zirkulationsmittel (77) zum Schaffen und Aufrechterhalten einer Zirkulation (31') des Wasserstoffs (31) innerhalb der Erzeugungskammer (53) besteht, so dass der Wasserstoff (31) iterativ befördert wird und iterativ das Elektronendonator-Material (75) trifft, um eine weitere Transformation des Wasserstoffs (31) in H⁻-Ionen zu verursachen.

14. Energieerzeuger gemäß Anspruch 11, wobei das Mittel zum Liefern eines Energievektors (69) aus einer Menge von Sekundärmaterial (28) besteht, das innerhalb eines vorbestimmten maximalen Abstands (S) vom Primärmaterial (19) angeordnet ist, wobei das Sekundärmaterial (28) angepasst ist, um mit Protonen von einer Energie höher als eine vorbestimmte Energieschwelle zu reagieren, so dass während der orbitalen Einfangsreaktion (150) der H⁻-Ionen emittierte Protonen (35) nukleare Sekundärreaktionen verursachen, die mit einer Freisetzung der Strahlungen und/oder der Partikel auftreten.

## Revendications

1. Une méthode pour la production d'énergie par des réactions nucléaires entre l'hydrogène (31) et un métal de transition, ladite méthode comprenant les étapes suivantes :
- agencement préalable (110) d'une matière première (19) comprenant ledit métal de transition ;
- mise et maintien en contact dudit hydrogène (31) avec ladite matière première (19) ;
- chauffage (130) de ladite matière première (19) à une température initiale (T₁) supérieure à une température critique prédéterminée ;
- production d'une impulsion (140) dans ladite matière première (19) afin de causer une production d'ions H⁻ (35) à partir dudit hydrogène (31), et d'engendrer des réactions de capture (150,151) desdits ion H⁻ (35) par ladite matière première (19), en entraînant ainsi une production d'une énergie thermique (q) ;
- extraction (160) d'une puissance thermique (Q) découlant de ladite énergie thermique (q) générée, tout en maintenant la température de ladite matière première (19) au-dessus de ladite température critique,
**caractérisée en ce que** une étape (200) est prévue pour la production d'autres ions H⁻ (35) disponibles pour lesdites réactions de capture (150,151), de sorte d'une part que la concentration desdits ions H⁻ (35) passe d'une première valeur de concentration à une deuxième valeur de concentration dans ledit hydrogène (31) qui est au contact de ladite matière première (19), d'autre part que le taux desdites réactions de capture (150,151) augmente, et, en conséquence, que ladite génération d'énergie thermique (q) augmente jusqu'à un niveau d'énergie thermique accru, ladite étape (200) de génération de nouveaux ions H⁻ (35) comprenant une étape d'ionisation dudit hydrogène (31) qui est en contact avec ladite matière première (19) ;
ladite étape d'ionisation dudit hydrogène (31) étant sélectionnée dans le groupe composé de :
- une étape d'ionisation comprenant :
- l'agencement préalable d'un matériau donneur d'électrons (75) comprenant au moins un élément chimique donneur d'électrons proche de ladite matière première (19) ;
le transport et l'impact dudit hydrogène (31) sur ledit matériau donneur d'électrons (75) ;
- une étape d'ionisation comprenant l'étape de fourniture continue, variable ou discontinue d'un vecteur d'énergie (69) audit hydrogène, ledit vecteur d'énergie étant sélectionné dans le groupe composé :
- d'un rayonnement ionisant de nature et fréquence prédéterminées ;
- de faisceaux de particules,
- une étape d'ionisation comprenant
- l'augmentation d'une température (T) de ladite matière première (19), d'une température de service (T₀) à une température augmentée prédéterminée (T*), ladite température augmentée (T*) entraînant une augmentation de ladite concentration desdits ions H⁻ (35) ;
- le maintien (72) de ladite température augmentée (T*) de ladite matière première (19) en augmentant ladite puissance thermique (Q) enlevée jusqu'à la réalisation d'une puissance thermique à l'état d'équilibre augmentée (Q₀).

2. Une méthode selon la revendication 1, ladite matière première comprenant un nombre prédéterminé de nanostructures de cristal groupées (21), à savoir des groupes (21) dudit métal de transition, lesdites nanostructures de cristal (21) possédant un nombre d'atomes du métal de transition inférieur à un nombre d'atomes déterminé.

3. Une méthode selon la revendication 1, dans laquelle est prévue une étape d'entraînement d'une circulation (31') d'un flux dudit hydrogène (31) au sein d'une chambre de génération (53) contenant ladite matière première (19), de sorte que ledit hydrogène (31) effectue de manière itérative ladite étape de transport et d'incidence dudit matériau donneur d'électrons en particulier, est prévue une étape (300) d'ajustage de ladite puissance thermique (Q) comprenant l'étape de variation d'un débit de ladite circulation (31') dudit hydrogène (31) au sein de ladite chambre de génération (53).

4. Une méthode selon la revendication 3, ledit matériau donneur étant sélectionné dont la composition est la suivante : césium, baryum, strontium, rubidium, lithium, sodium, calcium, potassium, francium, radium, une combinaison d'un premier élément chimique avec un deuxième élément chimique, de sorte que ledit matériau donneur d'électrons (75) présente valeur absolue d'électronégativité de Pauling inférieure à 1.

5. Une méthode de production d'énergie selon la revendication 1, ledit vecteur d'énergie (69) étant un rayonnement ionisant sélectionné dans le groupe composé :
- d'une radiofréquence, en particulier de micro-ondes ;
- un rayonnement lumineux
- d'un rayonnement UV ;
- d'un rayonnement X ;
- d'un rayonnement α - ;
- d'un rayonnement β - ;
- d'un rayonnement γ- ;
- d'une combinaison des rayonnements susmentionnés ;

6. Une méthode de production d'énergie selon la revendication 1, ledit vecteur d'énergie (69) étant un faisceau de particules sélectionné dans le groupe composé :
- de protons ;
- d'hypérons ;
- de mésons ;
- de leptons ;
- d'ions métalliques ;
- d'une combinaison des particules ci-dessus ;

7. Une méthode de production d'énergie selon la revendication 1, comprenant une étape (300) d'ajustage de ladite puissance thermique (Q), comprenant une étape de variation de l'intensité dudit rayonnement d'ionisation et/ou dudit faisceau de particules.

8. Une méthode selon la revendication 1, dans laquelle est prévue une étape d'agencement préalable d'un matériau radioactif proche de ladite matière première (19).

9. Une méthode selon la revendication 1, comprenant une étape d'agencement préalable (115) d'une quantité de matière secondaire (28) faisant face à ladite matière première (19) au sein d'une distance maximale prédéterminée (S) depuis ladite matière première (19), ladite matière secondaire (28) étant adaptée pour réagir avec des protons (35"') dont l'énergie est supérieure à un seuil d'énergie prédéterminé généré par des réactions nucléaires dépendantes de protons survenant dans ladite matière première (19),
ladite étape de fourniture d'un vecteur d'énergie (69) étant effectuée par lesdits rayonnements et/ou lesdites particules dispersées par lesdites réactions nucléaires dépendantes de protons,
en particulier ladite matière secondaire étant sélectionnée parmi les suivants : bore, lithium, et un métal de transition, ou une combinaison de ces derniers.

10. Une méthode selon la revendication 1, ladite étape d'augmentation de T étant réalisée par une étape sélectionnée dans le groupe composé de :
- la réduction (71) de l'extraction (Q) de la puissance thermique depuis une puissance thermique à l'état d'équilibre (Q₀) ; la diminution de la pression dudit hydrogène (31) au contact avec lesdits groupes dudit noyau actif (18).

11. Un générateur d'énergie (101,102,103,104) permettant d'obtenir de l'énergie à l'aide de réactions nucléaires entre l'hydrogène (31) et un métal de transition, ledit générateur d'énergie comprenant :
- un noyau actif (18) comprenant une quantité prédéterminée de matière première (19) composée dudit métal de transition ;
- une chambre de génération (53) contenant ledit noyau actif (18), et étant adaptée pour contenir ledit hydrogène (31) pour établir un contact entre ledit hydrogène (31) avec ladite matière première (19) ;
- un dispositif de chauffage (56) pour chauffer ledit noyau actif (18) au sein de ladite chambre de génération (53) jusqu'à une température de procédé initiale (T₁) supérieure à une température critique prédéterminée ;
- un dispositif de déclenchement (61,62,67) pour la production d'une action impulsive (140) sur ledit noyau actif (18),
ladite chambre de génération (53) et ledit dispositif de déclenchement (61,62,67) et/ou ledit dispositif de chauffage (56) étant adaptés pour engendrer une production de ions d'H⁻ (35) depuis ledit hydrogène (31), et engendrer une réaction de capture (150,151) desdits ions d'H⁻ (35) par ladite matière première (19), en donnant lieu ainsi à la production d'une énergie thermique ;
- un dispositif (54) pour l'extraction, de ladite chambre de génération (53), d'une puissance thermique (Q), et le maintien (T) dudit noyau actif (18) au-dessus de ladite température critique,
**caractérisé en ce que** un dispositif est prévu pour augmenter lesdits ions d'H⁻ (35) disponibles pour lesdites réactions de capture (150,151) en faisant passer la concentration desdits ions d'H- (35) d'une première valeur de concentration à une deuxième valeur de concentration dans ledit hydrogène (31), qui est au contact de ladite matière première (19), de sorte que le taux desdites réactions de capture (150,151) et ladite production d'énergie thermique (q) augmente jusqu'à un niveau d'énergie thermique augmenté,
ledit dispositif d'augmentation desdits ions d'H⁻ (35) comprenant un dispositif d'ionisation pour l'ionisation dudit hydrogène (31) qui se trouve au contact de ladite matière première (35),
ledit dispositif d'ionisation étant sélectionné dans le groupe composé de :
- un dispositif d'ionisation comprenant :
- un matériau donneur d'électrons (75) dans lequel un élément chimique donneur d'électrons est présent, sélectionné dans le groupe dont la composition est la suivante : Cs; Ba; Sr; Rb; Li; Na; Ca, K; Fr; Ra, ledit matériau donneur d'électrons étant agencé à proximité dudit noyau actif (18) ;
- un dispositif (79) pour le transport dudit hydrogène sur ledit matériau donneur d'électrons (75) son incidence sur ce dernier,
- un dispositif d'ionisation comprenant un dispositif (60) pour la fourniture d'un vecteur d'énergie (69) audit hydrogène (31), ledit vecteur d'énergie (69) étant sélectionné dans le groupe composé :
- d'un rayonnement ionisant de différentes natures et à fréquence prédéterminée ;
- d'un faisceau de particules ;
- d'une combinaison de ces derniers ;
- un dispositif d'ionisation comprenant :
- un dispositif pour la réaction de la puissance thermique à l'état d'équilibre au cours de l'étape d'extraction de la puissance thermique, de sorte que la réduction de puissance extraite engendre une augmentation prédéterminée de la température d'une matière première, depuis une température de service, jusqu'à la réalisation d'une température augmentée, afin que le taux de formation d'ions H⁻ augmente ;
- un dispositif pour le maintien de la température de la matière première à une valeur de température prédéterminée, en augmentant la puissance extraite, en particulier, afin de rétablir la température de service, la puissance extraite atteignant une valeur supérieure à celle de la puissance extraite à l'état d'équilibre, après l'accomplissement de l'étape de rétablissement de la température de service.

12. Un générateur d'énergie selon la revendication 11, dans lequel la matière première comprend une quantité prédéterminée de nanostructures de cristal groupées (21), à savoir des groupes (21) dudit métal de transition, lesdites nanostructures de cristal (21) possédant un nombre d'atomes de métal de transition inférieur à un nombre d'atomes déterminé, en particulier ladite matière première comprend du nickel.

13. Un générateur d'énergie selon la revendication 11, dans lequel ledit dispositif d'ionisation comprend un dispositif de circulation (77) pour la création et le maintien d'une circulation (31') dudit hydrogène (31) au sein de ladite chambre de génération (53), de sorte que ledit hydrogène (31) soit transporté par itération, et heurte par itération ledit matériau donneur d'électrons (75), en entraînant une nouvelle transformation d'hydrogène (31) en ions H⁻.

14. Un générateur d'énergie selon la revendication 11, dans lequel ledit dispositif de fourniture d'un vecteur d'énergie (69) comprend une quantité de matière secondaire (28) agencée au sein d'une distance maximum (S) prédéterminée depuis ladite matière première (19), ladite matière secondaire (28) étant adaptée pour réagir avec des protons d'une énergie supérieure à un seuil d'énergie prédéterminé, de sorte que les protons émis au cours de ladite réaction de capture orbitale (150) desdits ions H⁻ (35) engendre des réactions nucléaires secondaires survenant avec l'émission desdits rayonnements et/ou desdites particules.
